(19) Europäisches Patentamt
European Patent Office
Office européen des brevets

(11) Veröffentlichungsnummer : **0 097 869**
**B1**

# (12) EUROPÄISCHE PATENTSCHRIFT

(45) Veröffentlichungstag der Patentschrift : **21.01.87**

(51) Int. Cl.[4] : **C 08 G 18/46**, C 08 G 18/10, C 08 G 18/83

(21) Anmeldenummer : **83105839.1**

(22) Anmeldetag : **15.06.83**

**(54) Primäre aromatische Aminogruppen, Urethangruppen und Polyestergruppierungen aufweisende Verbindungen, Verfahren zu ihrer Herstellung und ihre Verwendung als Baukomponente von Polyurethanen.**

(30) Priorität : **23.06.82 DE 3223395**

(43) Veröffentlichungstag der Anmeldung : **11.01.84 Patentblatt 84/02**

(45) Bekanntmachung des Hinweises auf die Patenterteilung : **21.01.87 Patentblatt 87/04**

(84) Benannte Vertragsstaaten : **BE DE FR GB IT**

(56) Entgegenhaltungen :
**EP-A- 0 079 536**
**DE-A- 2 447 748**
**DE-A- 2 948 419**
**Patent Abstracts of Japan Band 4, Nr.34, 22. März 1980 Seite 36C3**

(73) Patentinhaber : **BAYER AG**
**Konzernverwaltung RP Patentabteilung**
**D-5090 Leverkusen 1 Bayerwerk (DE)**

(72) Erfinder : **Rasshofer, Werner, Dr.**
**Wolfskaul 10**
**D 5000 Köln 80 (DE)**

**EP 0 097 869 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von primäre aromatische Aminogruppen, Urethangruppen und Polyestergruppierungen aufweisender, für das Isocyanat-Polyadditionsverfahren geeigneter Verbindungen durch basische Hydrolyse entsprechender NCO-Prepolymerer auf Basis von Polyesterpolyolen und aromatischen Polyisocyanaten, und die Verwendung der erfindungsgemäßen Verfahrensprodukte als Aufbaukomponente von gegebenenfalls zellförmigen Polyurethan-Kunststoffen und -Schaumstoffen.

Verbindungen, die primäre aromatische Aminogruppen und Estergruppen aufweisen, sind im Prinzip bekannt. Die DE-A 2 447 748 beansprucht ein Verfahren zur Herstellung polymerer Polyamine aus einem Polyurethanprepolymer, das aus einem Polyesterpolyol und überschüssigem Diisocyanat hergestellt werden kann, durch Komplexbildung mit einer praktisch wasserfreien, nicht oxidierenden organischen oder anorganischen Säure und nach folgender Komplexzerstörung und Neutralisation mit einer wäßrigen Basenlösung. In der SU-PS 538 003 werden als Härter für Makrodiisocyanate Urethanoxypropylenaminodiaminooligoester beansprucht.

In der DE-A 1 495 763 (US-PS 3 385 829) ist erwähnt, daß aus Polyhydroxylverbindungen, z. B. auf Polyesterbasis, durch Umsetzung mit Nitroarylisocyanaten sich Nitroarylpolyurethane herstellen lassen, die durch katalytische Hydrierung in die entsprechenden Amine umgewandelt werden können. In der gleichen Veröffentlichung ist erwähnt, daß Produkte, die durch Umsetzung von aromatischen Diisocyanaten mit Polyolverbindungen, wie z. B. Polyestern, gebildet werden, sich mit Ameisensäure in Formylamidogruppen aufweisende Verbindungen überführen lassen, wobei anschließend die Formylamidogruppen durch Hydrolyse mit verdünnten Säuren oder Laugen unter Bildung von Aminogruppen hydrolysiert werden können.

In der DE-B 1 056 367 werden Polypropylenglykolether mit aliphatischen oder aromatischen Dicarbonsäuren halbseitig verestert und die verbliebenen Carboxylgruppen mit überschüssigen Diaminen bei 130 bis 230 °C so umgesetzt, daß die eine $NH_2$-Funktion als Säureamid gebunden wird, die zweite aber als solche erhalten bleibt.

Auch das Verfahren gemäß DE-A 2 546 536, bei dem Hydroxylgruppen aufweisende Ketimine, Aldimine oder Enamine mit endständige NCO-Gruppen aufweisenden Verbindungen umgesetzt werden, führt nach Hydrolyse der erhaltenen Polyketimine, Polyaldimine oder Poly-enamine zu endständige Aminogruppen aufweisenden Verbindungen. Verwendet man als Hydroxylgruppen aufweisende Enamine solche, die am Stickstoff alkyliert sind, lassen sich auch Polyester zur Herstellung der endständige NCO-Gruppen aufweisenden Verbindungen einsetzen, so daß Estergruppen und sekundäre, aliphatische Aminogruppen aufweisende Verbindungen erhalten werden.

Alle diese Verfahren haben keine technische Bedeutung erlangt, da die Verfahren entweder zu teuer und umständlich sind und/oder daß die Verfahrensprodukte für übliche Anwendungszwecke zu hohe Viskositäten aufweisen. Ein weiterer Grund ist in der Tatsache zu sehen, daß die oben angeführten Reaktionen unter Bedingungen ablaufen, bei denen ein beträchtlicher Teil der ursprünglichen Estergruppen unter z.B. Hydrolyse, Amidbildung oder Umesterung zerstört wird.

Aufgabe der vorliegenden Erfindung ist es deshalb, ein einfaches Verfahren zur Verfügung zu stellen, das in kurzer Zeit und in hohen Ausbeuten ein Produkt liefert, das unter möglichst weitgehendem Erhalt der ursprünglichen Polyesterstruktur einen hohen Anteil an aromatischen Aminogruppen aufweist.

Überraschenderweise wurde gefunden, daß die Verfahren der basischen Hydrolyse von NCO-Prepolymeren, wie sie zur Herstellung von Polyaminen auf Polyetherbasis in DE-A 2 948 419 beschrieben sind, in gegebenenfalls modifizierter Form auch geeignet sind, aus endständige aromatische NCO-Gruppen aufweisenden NCO-Prepolymeren auf Polyesterbasis aus niedermolekularen aromatischen Polyisocyanaten, Estergruppen aufweisenden Polyolen des durchschnittlichen Molmassenbereichs von 400 bis 12 000, vorzugsweise 500 bis 4 000, und gegebenenfalls niedermolekularen Kettenverlängerungsmitteln des Molmassenbereiches 18 bis 399, in hoher Raum/Zeit-Ausbeute endständige aromatische Aminogruppen sowie Urethangruppen und Estergrupppierungen und gegebenenfalls weitere, der Isocyanatchemie entstammende Gruppen wie Harnstoff-, Biuret-, Allophanat-, Isocyanurat-, Carbodiimid-, Amid- und/oder zusätzlich auch Ether-, Thioether-, Acetal-, Dialkyl-Siloxan-Gruppen aufweisende Polyamine zu liefern, ohne daß die Polyestergruppierungen in merklichem Maße verseift werden.

Gegenstand der Erfindung ist also ein Verfahren zur Herstellung von primäre aromatische Aminogruppen, Urethangruppen, Polyestergruppierungen und gegebenenfalls weitere, der Isocyanatchemie entstammende Gruppen aufweisenden Polyaminen durch basische Hydrolyse von aromatisch gebundene NCO-Gruppen aufweisenden Verbindungen, dadurch gekennzeichnet, daß man

I. aromatische NCO-Gruppen, Urethangruppen und Polyestergruppierungen, sowie gegebenenfalls weitere, der Isocyanatchemie entstammende Gruppen aufweisende NCO-Verbindungen mit einem Gehalt an 0,5 bis 11,5 Gew.-%, vorzugsweise 1,7 bis 7,2 Gew.-%, besonders bevorzugt 2,2 bis 6,5 Gew.-% NCO, gegebenenfalls gelöst in einem NCO-inerten Lösungsmittel durch Vermischen mit

a) Alkalihydroxiden, Erdalkalihydroxiden, Alkalisilikaten, Alkalisulfiden, Alkalicyaniden und/oder Tetraalkylammoniumhydroxiden bei Einsatz von $OH^{\ominus}$/NCO-Verhältnissen zwischen 0,3 : 1 und 2 : 1

b) einer ausreichenden Menge von Wasser von mindestens 1 Mol Wasser pro Mol NCO-Gruppe

und gegebenenfalls Lösungsmitteln,

c) gegebenenfalls in Gegenwart von niedermolekularen, mindestens eine Hydroxyl- und/oder Amino-gruppe und/oder andere H-aktive Gruppen aufweisenden Verbindungen des Molmassenbereichs 18 bis 399, bei Aufrechterhaltung einer Temperatur in der Reaktionsmischung unter 100 °C in eine aromatisch gebundene Carbamatgruppen, Urethangruppen, Polyestergruppierungen und gegebenenfalls weitere, der Isocyanatchemie entstammende Gruppen aufweisende Reaktionsmischung überführt und

II. zur Gewinnung des aromatischen Polyamins aus der Carbamatgruppen-haltigen Reaktionsmischung diese entweder

d) mit einem Protonendonator aus der Gruppe einer in einem unlöslichen, polymeren Skelett fixierten Säure oder einer flüssigen oder wasserlöslichen Mineral- oder organischen Säure zur Neutralisation der Base behandelt und das Polyamin gegebenenfalls abtrennt und/oder

e) thermisch bei Temperaturen bis 200 °C behandelt und das Polyamin gegebenenfalls abtrennt und/oder

f) mit 10 bis 1 000 Teilen eines Lösungsmittel pro 100 Teile Reaktionsmischung behandelt, gegebenenfalls thermisch behandelt und das Polyamin gegebenenfalls abtrennt.

Das erfindungsgemäße Verfahren ist besonders dadurch gekennzeichnet, daß man als NCO-Verbindungen mindestens eine, vorzugsweise 2-8, besonders bevorzugt 2-3, aromatische NCO-Gruppen aufweisende NCO-Voraddukte von aromatischen Polyisocyanaten, insbesondere aromatischen Diisocyanaten, an höhermolekulare, mindestens eine Hydroxylgruppe, vorzugsweise 2-8, besonders bevorzugt 2-3, Hydroxylgruppen aufweisende Polyester aus Dicarbonsäuren und Polyolen (ausschließlich Polylactone und Polycarbonate) des Molmassenbereichs 400 bis 12 000, vorzugsweise 500 bis 5 000, ganz besonders bevorzugt 1 000 bis 4 000, gegebenenfalls in Kombination mit bis zu 50 Gew.-%, vorzugsweise bis zu 20 Gew.-%, an höhermolekularen, mindestens eine Hydroxylgruppe, vorzugsweise 2-8, besonders bevorzugt 2-3 Hydroxylgruppen aufweisenden Polyhydroxylverbindungen aus der Reihe der Polyether, Polyacetale, Polythioether, Polycarbonate, Polysiloxane oder Polybutadiene mit Molmassen von 400 bis 12 000, vorzugsweise 500 bis 5 000, ganz besonders bevorzugt 1 000 bis 4 000, und/oder gegebenenfalls H-aktive Gruppen tragenden, vorzugsweise 2- bis 4-funktionellen Kettenverlängerungsmitteln des Molekulargewichts 18 bis 399, vorzugsweise 62 bis 250, wobei das Äquivalentverhältnis der aktive Wasserstoffatome tragenden Gruppen zu den NCO-Gruppen von 1 : 1,5 bis 1 : 2,8, bevorzugt 1 : 1,5 bis 1 : 2 und der NCO-Gehalt der NCO-Verbindungen zwischen 0,5 und 11,5 Gew.-%, vorzugsweise 1,7 bis 7,2 Gew.-% beträgt, als Ausgangsmaterialien zur basischen Hydrolyse einsetzt.

Die Hydrolyse der NCO-Gruppe wird verfahrensgemäß unter Verwendung von « Basen » in Mengen von 0,3 : 1 bis 2 : 1, vorzugsweise 0,6 : 1,8, besonders bevorzugt 0,8 : 1,1, äquivalenten Base pro NCO-Gruppe durchgeführt, wobei als « Basen » Alkalihydroxide, Erdalkalihydroxide, Alkalisilicate, Alkalisulfide, Alkalicyanide und/oder Tetraalkylammoniumhydroxide, gegebenenfalls in Anwesenheit von Lösungsmitteln und/oder überschüssigem Wasser eingesetzt werden. Dabei können die gegebenenfalls H-aktive Gruppen aufweisenden Verbindungen des Molmassenbereichs 62-250 mit vorzugsweise 2-4 H-aktiven Gruppen aus der Reihe Hydroxyl- und/oder Aminogruppen gleichfalls mitverwendet werden.

Zur Aufarbeitung kann man die nun Carbamatgruppierungen enthaltende Reaktionsmischung mit ≥ 1 Äquivalent eines Protonendonators, bezogen auf die äquivalente Menge an « Base », aus der Hydrolysenstufe I behandeln und diesen Protonendonator aus der Gruppe der Mineralsäuren, organischen Säuren und/oder in einem unlöslichen Polymerenskelett fixierten Säuren (z. B. sauren Ionenaustauschern) auswählen.

Die Carbamatgruppen aufweisende Reaktionsmischung kann nach dem erfindungsgemäßen Verfahren jedoch auch zur thermischen Zerlegung des Carbamats bei Temperaturen bis 200 °C, vorzugsweise bis 160 °C, gegebenenfalls in Gegenwart von Lösungsmitteln und/oder unter Anlegung eines Vakuums behandelt werden, wobei keine oder evtl. eine Teil-Neutralisation mit Protonendonatoren vorgenommen werden kann.

Die Carbamatgruppen aufweisende Reaktionsmischung kann zur Zerlegung des Carbamats auch mit einem mit Wasser nicht mischbaren Lösungsmittel extrahiert werden. Das anfallende Polyamin kann je nach Verfahren und Eigenschaften durch Phasentrennung, Kristallisieren oder Extrahieren abgetrennt bzw. gereinigt werden. Das erfindungsgemäße Verfahren wird im folgenden noch eingehender beschrieben.

Eine wichtige Verfahrensmodifikation besteht darin, daß dem basischen Hydrolysemedium aus der « Base » a) und Wasser b) eine nieder- oder höhermolekulare, zumindest eine « H-aktive Gruppierung » aufweisende Verbindung c), wie z. B. Hydroxyl- und/oder Aminogruppen aufweisende Verbindungen, z. B. Mono- oder Polyole, Aminoalkohole oder Mono- bzw. Polyamine, bevorzugt Diole, zugefügt wird. Als « H-aktive Gruppierung » werden dabei solche Gruppen OH, $—NH_2$, =NH, —SH, $—CO \cdot NH \cdot NH_2$, —COOH, —NH · CO— oder aktivierte Methylengruppen bezeichnet, welche Zerewitinoff-aktive Wasserstoffatome aufweisen und entsprechend gegenüber NCO-Gruppen reaktiv sind.

Diese Verfahrensmodifikation bringt Vorteile aus folgenden Gründen : so tritt, insbesondere bei einem Base/NCO-Verhältnis von 1,01 bis 1,2 leicht auch die Bildung von Harnstoffgruppen ein, so daß über Harnstoffgruppen vorverlängerte Produkte entstehen. Bei Äquivalenz oder einem Basenunterschuß (Base/NCO ≤ 1,0 ; z. B. 0,8-1,0) wird die Harnstoffbildung sogar noch verstärkt.

Solche Harnstoffgruppen aufweisenden Polyamine sind für manche Anwendungszwecke zwar

wertvoll, doch wird in den meisten Fällen aus Gründen der Verarbeitbarkeit ein Harnstoffgruppen-freies, niedriger viskoses Produkt bevorzugt.

NCO-Prepolymere und andere NCO-Verbindungen weisen für gewöhnlich noch einen gewissen Anteil an monomeren Polyisocyanaten, z. B. Toluylendiisocyanat, auf, der bei der Hydrolysereaktion in monomeres Polyamin, z. B. Toluylendiamin, umgewandelt wird. Für viele Anwendungszwecke ist aber aus physiologischen Gründen die weitgehende Abwesenheit von freien, niedermolekularen Aminen erwünscht oder sogar erforderlich. Dies kann zwar dadurch erreicht werden, daß die niedermolekulare Polyisocyanate aufweisenden NCO-Verbindungen einer Destillation, gegebenenfalls unter Anlegen von Vakuum, z. B. mittels eines sogeannten Dünnschichters, unterworfen werden, jedoch ist dieser Destillationsschritt kostenintensiv. Zur Erreichung von weitgehender Monomerenfreiheit kann man auch ein- oder mehrwertige Hydroxylverbindungen nach der Herstellung des NCO-Prepolymeren diesem zufügen, jedoch werden so die Verweilzeiten im Kessel verlängert und die Produktionskosten erhöht.

Endständige aromatische Aminogruppen aufweisende Polyamine werden bevorzugt in vielen Anwendungen im Gemisch mit anderen, endständigen Aminogruppen aufweisenden Polyaminen eingesetzt. Solche Mischungen bestehen dann beispielsweise aus einem Aminopolyester des Molmassenbereichs 2 000 bis 4 000 und einem Aminopolyester des Molmassenbereichs 300 bis 1 900. Solche Mischungen lassen sich etwa dadurch herstellen, daß zwei oder mehrere solcher Polyamine miteinander vermischt werden. Dies setzt voraus, daß beide Polyamine miteinander misch- und lösbar sind, was jedoch nicht immer der Fall ist. Zudem ist es vergleichsweise unökonomisch, für die Herstellung einer Reaktionskomponente mehrmals die gleichen Verfahrensschritte durchzuführen.

Solche Polyamingemische lassen sich auch dadurch herstellen, daß entsprechende NCO-Prepolymergemische der Hydrolyse unterworfen werden. Auch hier müßten zwei verschiedene NCO-Prepolymere getrennt hergestellt werden und auch hier ist die Löslichkeit der oftmals sich verfestigenden oder kristallinen NCO-Komponente des niederen Molekulargewichtsbereichs problematisch.

Solche Polyamingemische lassen sich auch dadurch herstellen, daß zu einem NCO-Prepolymer, das noch freie Polyisocyanate enthält, weitere, gegenüber Isocyanaten reaktive Komponenten mit reaktiven H-Atomen (z. B. Diole) gegeben werden, die vorzugsweise mit dem freien, monomeren Polyisocyanat reagieren und daß das so erhaltene NCO-Prepolymergemisch nach dem Hydrolyseverfahren umgesetzt wird. Nachteilig ist auch hier die Notwendigkeit eines zweiten Schrittes und die z. T. geringe Löslichkeit von niedermolekularen NCO-Prepolymeren in den höhermolekularen NCO-Prepolymeren.

Das etwaige kristalline Ausfallen niedermolekularer NCO-Prepolymerer kann auch vermindert werden, wenn zu einem höhermolekularen NCO-Prepolymer weitere Verbindungen mit reaktiven H-Atomen, z. B. Diole, zugegeben werden, so daß Kettenvorverlängerung eintritt. Abgesehen davon, daß wiederum ein zweiter Reaktionsschritt erforderlich ist, steigt jedoch die Viskosität dieses vorverlängerten NCO-Prepolymergemischs stark an. Dies ist für die Durchführung der oben geschilderten Hydrolyseverfahren, die eine möglichst niederviskose NCO-Komponente verlangen, nachteilig, bzw. macht die Verwendung von Lösungsmitteln nötig.

Diese Nachteile lassen sich vermeiden, wenn man entsprechend einer modifizierten Ausführungsform der Erfindung die NCO-Prepolymere mit Basen und Wasser und zusätzlich H-aktive Gruppen aufweisenden Verbindungen c) im basischen Reaktionsmedium zur Reaktion bringt und in der bereits beschriebenen Weise aus der « Carbamat-Zwischenstufe » die bei der Hydrolyse-reaktion modifizierten aromatischen Polyamine gewinnt.

Das erfindungsgemäße Verfahren und seine modifizierte Ausführungsform besitzen gegenüber dem vorbekannten Stand der Technik folgende Vorteile :

Die Umwandlung der NCO-Verbindungen in Polyamine erfolgt als Eintopfverfahren in einfacher und wirtschaftlicher Verfahrensform.

Die den NCO-Verbindungen zugrundeliegenden Komponenten (Polyisocyanate, modifizierte Polyisocyanate, höhermolekulare Polyesterpolyole, niedermolekulare Polyole, Polyamine etc.) sind preiswerte, in großen Mengen technisch verfügbare Produkte.

Die Reaktionsausbeuten sind praktisch quantitativ und die Raum/Zeit-Ausbeute der Eintopfreaktion ist hoch.

Herkömmliche Kesselapparaturen genügen ohne besondere apparative Vorkehrungen.

Das Verfahren ist auch vorteilhaft kontinuierlich durchführbar.

Das Verfahren ist umweltfreundlich, da ohne Lösungsmittel gearbeitet werden kann und in der bevorzugten Ausführungsform lediglich geringe Mengen Kohlendioxid in Freiheit gesetzt werden können und nur die geringst möglichen Salzmengen (kohlensaure Salze aus den Basen) anfallen. Auch aus freie, niedermolekulare Polyisocyanate enthaltenden NCO-Verbindungen lassen sich ohne modifizierende Behandlung der NCO-Verbindungen in der modifizierten Ausführungsform aromatische Polyamine, welche praktisch frei von monomeren Polyaminen sind, herstellen.

Es lassen sich in einfacher Weise mit einem Reaktionsschritt Polyamine herstellen, die in einem Molekül über z. B. Urethangruppen verknüpfte Segmente unterschiedlicher Art besitzen.

Aus einer z. B. difunktionellen NCO-Verbindung läßt sich durch Verwendung einer höherfunktionellen « H-aktive Gruppen » aufweisenden Verbindung c) wie z. B. Polyolen, Polyaminen, Monohydroxymono- und -diaminen, Dihydroxymonoaminen oder Polythiolen ein tri- oder höherfunktionelles aromatisches Polyamin der erfindungsgemäßen Zusammensetzung gewinnen.

Ein weiterer Gegenstand der Erfindung ist die Verwendung der nach dem erfindungsgemäßen Verfahren zugänglichen, gegebenenfalls modifizierten, aromatische primäre Aminogruppen, Urethangruppen, Polyestergruppierungen und gegebenenfalls weitere, aus der Isocyanatchemie entstammende Gruppierungen, aufweisenden Verbindungen zur Herstellung von gegebenenfalls zellförmigen Polyurethan-Kunststoffen und -Schaumstoffen, durch Umsetzung von

A) Polyisocyanaten und/oder blockierten Polyisocyanaten bzw. NCO-Prepolymeren mit

B) Polyaminen, sowie gegebenenfalls

C) weiteren, niedermolekularen und/oder höhermolekularen Verbindungen mit gegenüber Isocyanaten reaktiven Gruppen, gegebenenfalls

D) in Anwesenheit an sich bekannter Hilfs- und Zusatzstoffe,

dadurch gekennzeichnet, daß als Reaktionskomponente B) die nach dem erfindungsgemäßen Verfahren hergestellten aromatischen Polyamine mit Urethangruppen und Estergruppierungen und gegebenenfalls weiteren, aus der Isocyanatchemie entstammenden Gruppierungen, eingesetzt werden.

Die erfindungsgemäß als Ausgangsmaterialien für die zu den Polyaminen führende Hydrolysereaktion einzusetzenden, zwei oder mehrere aromatische NCO-Gruppen, Urethangruppen, Polyestergruppierungen sowie gegebenenfalls weitere, der Isocyanatchemie entstammende Gruppierungen, aufweisenden NCO-Verbindungen stellen bevorzugt sogenannte NCO-Prepolymere dar, wie sie in an sich bekannter Weise durch Umsetzung von endständige OH-Gruppen und mindestens zwei, vorzugsweise mehr als vier, Estergruppierungen aufweisenden Verbindungen, vorzugsweise sogenannten höhermolekularen Polyesterpolyolen aus Polycarbonsäuren und Polyolen des Molmassenbereichs von 400 bis 12 000 mit einem überschuß an aromatischen Polyisocyanaten entstehen.

Als Polyisocyanate zur Herstellung der freie NCO-Gruppen aufweisenden Verbindungen kommen im Prinzip beliebige, von hydrolysierbaren Gruppen, abgesehen von den NCO-Gruppen, im wesentlichen freie aromatische und heterocyclische Polyisocyanate, wie sie z. B. von W. Siefken in Justus Liebigs Annalen der Chemie, 562, Seiten 75 bis 136, beschrieben werden, beispielsweise solche der Formel Q $(NCO)_n$, in der n 2 bis 4, vorzugsweise 2 und Q einen aromatischen Kohlenwasserstoffrest mit 6 bis 15 C-Atomen oder einen heterocyclischen Rest bedeuten, z. B. aromatische Diisocyanate wie 1,3- und 1,4-Phenylendiisocyanat, 2,4- und 2,6-Toluylendiisocyanat, sowie beliebige Gemische dieser Isomeren, Diphenylmethan-2,4'- und/oder -4,4'-diisocyanat, einschließlich seiner Alkyl- und Chlor-substituierten Derivate und Naphthylen-1,5-diisocyanat. Geeignete Diisocyanate sind auch die in DE-A 2 922 966 beschriebenen 2,4'-Diisocyanatodiphenylsulfide und die mono- bis tetra-$C_1$-$C_8$-alkylsubstituierten Diphenylmethandiisocyanate, wie sie z. B. in EP-A 24 665 und DE-A 2 935 318 beschrieben sind.

Ferner kommen beispielsweise in Frage : Triphenylmethan-4,4',4''-triisocyanat, Polyphenyl-polymethylen-polyisocyanate, wie sie durch Anilin-Formaldehyd-Kondensation und anschließende Phosgenierung erhalten und z. B. in den GB-PS'en 874 430 und 848 671 beschrieben werden, m- und p-Isocyanatophenylsulfonyl-isocyanate gemäß der US-PS 3 454 606, perchlorierte Arylpolyisocyanate, wie sie z. B. in der DE-B 1 157 601 (US-PS 3 277 138) beschrieben werden ; Isocyanuratgruppen aufweisende aromatische Polyisocyanate, wie sie z. B. in der US-PS 3 001 973, in den DE-PS 1 022 789, 1 222 067 und 1 027 394 sowie in den DE-PS 1 929 034 und 2 004 048 beschrieben werden, Urethangruppen aufweisende aromatische Polyisocyanate, wie sie z. B. in der BE-PS 752 261 oder in den US-PS 3 394 164 und 3 644 457 beschrieben werden, acylierte Harnstoffgruppen aufweisende aromatische Polyisocyanate gemäß der DE-PS 1 230 778 sowie durch Telomerisationsreaktionen hergestellte aromatische Polyisocyanate, wie sie z. B. in der US-PS 3 654 196 beschrieben werden, oder die polymerhaltigen Polyisocyanate gemäß der US-PS 4 301 257.

Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren (« TDI »), Polyphenyl-polymethylen-polyisocyanate, wie sie durch Anilin-Formaldehyd-Kondensation und anschließende Phosgenierung hergestellt werden (« rohes MDI »), sowie Urethangruppen, Isocyanuratgruppen oder Harnstoffgruppen aufweisende Polyisocyanate (« modifizierte Polyisocyanate ), insbesondere solche modifizierten Polyisocyanate, die sich vom 2,4- und/oder 2,6-Toluylendiisocyanat bzw. vom 4,4'- und/oder 2,4'- und/oder 2,2'-Diphenylmethandiisocyanaten ableiten. Technisch vorrangig bedeutsam sind die Toluylendiisocyanate.

Für die Herstellung der NCO-Prepolymeren werden vorzugsweise höhermolekulare Verbindungen mit einem Molekulargewicht von 400 bis 12 000, bevorzugt 500 bis 5 000 und besonders bevorzugt 1 000 bis 4 000, eingesetzt, welche mindestens 2, vorzugsweise 2 bis 4, insbesondere 2 bis 3, gegenüber Isocyanat reaktive, sogenannte « aktive H-Atome » besitzende Gruppen aufweisen, erfindungsgemäß insbesondere Hydroxylgruppen tragende Polyester, zu mindestens 50 Gew.-%.

Solche Polyester sind Verbindungen mit mindestens zwei Estergruppierungen im Molekül, die z. B. aus der Polyveresterung von Polycarbonsäuren und Polyolen, (auschließlich Kohlensäure oder Hydroxycarbonsäuren oder Lactonen), entstammen.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogen-atome, substituiert und/oder ungesättigt sein.

Als Beispiele für solche Carbonsäuren und deren Derivate seien genannt : Bernsteinsäure, Adipinsäure, Korksäure, Azelainsäure, Sebacinsäure, Tetrahydrophthalsäureanhydrid, Hexahydrophthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure. Aromatische Polycarbonsäuren werden nur anteilweise zur Modifizierung (< 25 Mol-% der Dicarbonsäuren) eingesetzt, z. B. Isophthalsäure, Phthalsäureanhydrid, Tetrachlorphthalsäureanhydrid oder Trimellithsäure.

Als mehrwertige Alkohole kommen z. B. Ethylenglykol, Propylenglykol-(1,2), Butylenglykol-(2,3), Propandiol-1,3, Butandiol-1,4, Hexandiol-(1,6), Octandiol-(1,8), Neopentylglykol, 1,4-Bis-hydroxymethylcyclohexan, Terephthalsäure-bis-(2-hydroxyethyl)-ester, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, Dianhydrosorbit, ferner auch Ethergruppen enthaltende Polyole wie Di-, Tri-, Tetraethylenglykol und höhere Polyethylenglykole, Di-, Tri-, Tetra-propylenglykol und höhere Polypropylenglykole sowie Di-, Tri-, Tetra-butylenglykol und höhere Polybutylenglykole in Frage. Die Polyester können anteilig endständige Carboxylgruppen aufweisen.

Für spezielle Anwendungszwecke sind auch monofunktionelle Hydroxylester verwendbar, die unter Mitverwendung von monofunktionellen Säuren oder monofunktionellen Alkoholen hergestellt werden, doch sind für die Herstellung von Polyurethanen zwei- und/oder mehrfunktionelle Polyester als Ausgangsmaterialien bevorzugt.

Bevorzugt werden diese Hydroxypolyester alleine zur Umsetzung mit aromatischen Polyisocyanaten gebracht. Es ist jedoch auch möglich, und für manche Anwendungszwecke auch bevorzugt, sie im Gemisch mit anderen, 1 bis 4, bevorzugt 2 bis 4, besonders bevorzugt 2 bis 3 Hydroxyl- und/oder Amino- und/oder Thiolgruppen, bevorzugt 2 bis 3 Hydroxylgruppen aufweisenden, niedermolekularen Verbindungen des durchschnittlichen Molmassebereichs von 18 bis 399 und/oder auch höhermolekularen Verbindungen des durchschnittlichen Molmassebereichs 400 bis 12 000 als Cokomponenten einzusetzen.

Dabei werden auf 100 Mol-% aus dem Polyesterpolyol stammender Hydroxylgruppen 0,1 bis 100 Mol-% aus nicht dem Polyesterpolyol entstammenden, niedermolekularen oder höhermolekularen Verbindungen mit « aktive H-Atome » enthaltenden Gruppierungen eingesetzt. Bevorzugt sind jedoch Mengen von 0,1 bis 50 Mol-%, ganz besonders bevorzugt Mengen von 1 bis 20 Mol-%. Als solche, bei der Herstellung der als Startmaterial dienden NCO-Verbindungen als Cokomponenten mitzuverwendenden, « H-aktive Gruppen » aufweisende Verbindungen kommen als höhermolekulare Verbindungen die in der Polyurethanchemie üblichen, zwei oder mehrere OH-Gruppen aufweisenden höhermolekularen Polyacetale, Polythioether, Polycarbonate, Polylactone, Polyesteramide, Polysiloxane und/oder Polybutadiene, insbesondere aber Hydroxylgruppen tragende Polyether in Frage. Die Molmasse dieser höhermolekularen Verbindungen liegt dabei zwischen 400 und 12 000, vorzugsweise 500 bis 5 000 und besonders bevorzugt 1 000 bis 4 000. Diese höhermolekularen Verbindungen seien beispielsweise wie folgt beschrieben :

Die neben den Polyestern gegebenenfalls mitzuverwendenden, mindestens zwei, in der Regel 2 bis 8, vorzugsweise 2 bis 3, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propandiol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether sowie auf Formit oder Formose gestartete, Polyether kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

Auch OH, NH und/oder SH-Gruppen aufweisende Polybutadiene sind erfindungsgemäß geeignet (s. Progress Org. Coatings, Band 7 (3), 289-329 (1979)).

Als Polyacetale kommen z. B. die aus Glykolen, wie Di- oder Tri-ethylenglykol, 4,4'-Dihydroxyethoxydiphenylmethan, Hexandiol und Formaldehyd herstellbaren Verbindungen in Frage. Auch durch Polymerisation cyclischer Acetale wie z. B. Trioxan lassen sich erfindungsgemäß geeignete Polyacetale herstellen.

Unter den Polythioethern seien insbesondere die Kondensationsprodukte von Thiodiglykol mit sich selbst und/oder mit anderen Glykolen angeführt.

Auch bereits Urethan- oder Harnstoffgruppen enthaltende Polyhydroxylverbindungen sowie gegebenenfalls modifizierte natürliche Polyole sind verwendbar. Auch Anlagerungsprodukte von Alkylenoxiden

an Phenol-Form-aldehyd-Harze oder auch an Harnstoff-Formaldehyd-Harze sind erfindungsgemäß einsetzbar.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) *in situ* in den o. g., Hydroxylgruppen aufweisenden Verbindungen wie Polyestern und auch Polyethern ablaufen läßt. Derrartige Verfahren sind beispielsweise in den DE-B 1 168 075 und 1 260 142, sowie den DE-A 2 324 134, 2 423 984, 2 512 385, 2 513 815, 2 550 797, 2 550 833, 2 550 862, 2 633 293 und 2 639 254 beschrieben. Es ist aber auch möglich, gemäß US-PS 3 869 413 bzw. 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von höhermolekularen Polyolen, wie Polyethern (US-PS 3 383 351, 3 304 273, 3 523 093, 3 110 695 ; DE-B 1 152 536) oder Polycarbonatpolyolen (Polyestern) (DE-PS 1 769 795 ; US-PS 3 637 909) erhalten werden (sog. Polymer-Polyole) sind für das erfindungsgemäße Verfahren als Cokomponenten geeignet. Bei Verwendung von Polyetherpolyolen, welche gemäß DE-A 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter monomerer Carboxylgruppen eingeführt wurden (DE-A 2 714 291, 2 739 620 und 2 654 746) können mit besonderem Vorteil in Kombination mit mineralischen Füllstoffen eingesetzt werden.

Als alleinige Ausgangsmaterialien oder Zumischungskomponenten zur Herstellung von NCO-Prepolymeren können auch Polymerpolyole auf Basis von Polyestern (anstelle auf Basis von Polyethern) in NCO-Prepolymere überführt und erfindungsgemäß zu polymerhaltigen aromatischen Polyaminen auf Polyesterbasis verseift werden.

Eine weitere Modifizierungsreaktion ergibt sich durch die erfindungsgemäße Überführung der Polyester-NCO-Prepolymeren in aromatische Polyesterpolyamine und nachträgliche (Pfropf)-Polymerisation mit z. B. Styrol und/oder Acrylnitril, zu polymerhaltigen aromatischen Polyaminen auf Polyesterbasis zur Verwendung bei der Herstellung von Polyurethanen.

Vertreter der genannten, erfindungsgemäß zu verwendenden, höhermolekularen Polyhydroxylverbindungen sind z. B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der o. g. Verbindungen mit mindestens zwei gegenüber Isocyanaten reaktionsfähigen Wasserstoffatomen mit einem Molekulargewicht von 400 bis 12 000, z. B. Mischungen von verschiedenen Polyestern oder Mischungen aus Polyestern und (untergeordneten) Mengen an Polyethern oder anderen höhermolekularen Polyhydroxylverbindungen eingesetzt werden.

Für die Herstellung der im erfindungsgemäßen Verfahren als Ausgangsverbindungen dienenden NCO-Verbindungen können als anteilig mitzuverwendende, niedermolekulare Verbindungen mit gegenüber Isocyanaten reaktiven, aktive Wasserstoffatome aufweisende Gruppen (kurz als « H-aktive Gruppen » oder als « Zerewitinoff-aktiven Wasserstoff enthaltende Gruppen » bezeichnet) enthaltende Verbindungen, solche mit mindestens 2, gegenüber Isocyanaten reaktionsfähigen Wasserstoffatomen und einem Molekulargewicht von 18 bis 399, vorzugsweise 62 bis 250, in Betracht. Auch in diesem Fall versteht man hierunter Wasser und/oder Hydroxylgruppen und/oder Aminogruppen und/oder Thiolgruppen, vorzugsweise Hydroxylgruppen aufweisende Verbindungen, wie sie als Kettenverlängerungsmittel oder Vernetzungsmittel aus der Polyurethanchemie an sich bekannt sind. Diese Verbindungen weisen in der Regel 2 bis 8, vorzugsweise 2 bis 4, besonders bevorzugt 2, gegenüber Isocyanaten reaktionsfähige Wasserstoffatome auf.

Auch in diesem Fall können Mischungen von verschiedenen Verbindungen mit mindestens 2, gegenüber Isocyanaten reaktionsfähigen Wasserstoffatomen mit einem Molekulargewicht von 18 bis 399 verwendet werden.

Als Beispiele für derartige Verbindungen seien genannt : Wasser, Ethylenglykol, Propan-diol-(1,2) und -(1,3), Butandiol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-PS 3 723 392), Glycerin, Trimethylolpropan, Hexantriol-(1,2,6), Trimethylolethan, Pentaerythrit, Chinit, Mannit und Sorbit, Dianhydrohexite, Ricinusöl, Di-, Tri- und Tetraethylenglykol, Di-, Tri- und Tetrapropylenglykol, Dibutylenglykol und höhere Polyethylen-, Polypropylen- oder Polybutylenglykole mit einem Molekulargewicht bis 399, 4,4'-Dihydroxy-diphenylpropan, Di-hydroxymethylhydrochinon, Ethanolamin, Diethanolamin, N-Methyldiethanolamin, Triethanolamin und 3-Aminopropanol.

Als niedermolekulare Polyole kommen auch die Gemische von Hydroxyaldehyden und Hydroxyketonen (« Formose ») bzw. die hieraus durch Reduktion erhaltenen mehrwertigen Alkohole (« Formit ») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-A 2 639 084, 2 714 084, 2 714 104, 2 271 186, 2 738 154 und 2 738 512).

Erfindungsgemäß geeignet, jedoch im allgemeinen weniger bevorzugt, sind aliphatische Diamine wie beispielsweise Ethylendiamin, 1,4-Tetramethylendiamin, 1,6-Hexamethylendiamin, 1,12-Dodecamethylendiamin sowie deren Gemische, 1-Amino-3,3,5-trimethyl-5-aminomethylcyclohexan (« Isophorondiamin »), 2,4- und 2,6-Hexahydrotoluylendiamin sowie deren Gemische, Perhydro-2,4'- und -4,4'-diaminodiphenylmethan, p-Xylylendiamin, Bis-(3-aminopropyl)-methylamin, Diamino-perhydroanthrazene (DE-A 2 638 731) und cycloaliphatische Triamine gemäß DE-A 2 614 244. Auch Hydrazin und substituierte Hydrazine, z. B. Methylhydrazin, kommen erfindungsgemäß in Betracht.

Als Beispiele für aromatische Diamine, die besser einsetzbar, aber ebenfalls weniger bevorzugt sind, seien die Ethergruppen aufweisenden Diamine gemäß DE-A 1 770 525 und 1 809 172 (US-PS'en 3 654 364 und 3 736 295 und DE-OS 2 948 419, gegebenenfalls in 5-Stellung substituierte 2-Halogen-1,3-phenylendiamine (DE-A 2 001 772, 2 025 896 und 2 065 869), 3,3'-Dichlor-4,4'-diamino-diphenylmethan, die Toluylendiamine, 2,4'- und/oder 4,4'-Diaminodiphenylmethan, 4,4'-Diaminodiphenyldisulfide (DE-A 2 404 976), Diaminodiphenyldithioether (DE-A 2 509 404), durch Alkylthiogruppen substituierte aromatische Diphenylsulfid-diamine wie 3,4'-Diamino-3-ethyl-diphenylsulfid (DE-A 2 638 760), Sulfonat- oder Carboxylatgruppen enthaltende aromatische Diamine (DE-A 2 720 166) sowie die in der DE-A 2 635 400 aufgeführten hochschmelzenden Diamine genannt. Beispiele für aliphatisch-aromatische Diamine sind die Aminoalkylthioaniline gemäß DE-A 2 734 574.

Zur Herstellung der im erfindungsgemäßen Verfahren einzusetzenden NCO-Verbindungen sind auch polyfunktionelle, organofunktionelle Polysiloxane höhermolekularer bzw. niedermolekularer Struktur, die mindestens 2 endständige, gegenüber Isocyanat reaktionsfähige, « H-aktive Gruppen » und Struktureinheiten der Formel $-O-Si(R)_2-$ aufweisen, wobei in dieser Formel R für einen $C_1$-$C_4$-Alkyl- oder einen Phenylrest, vorzugsweise jedoch für einen Methylrest, steht, als Cokomponenten neben den Polyesterpolyolen geeignet. Erfindungsgemäß eignen sich als Ausgangsmaterialien sowohl die an sich bekannten, endständige organofunktionelle Gruppen aufweisenden reinen Polysiloxane als auch die an sich bekannten, endständig organofunktionellen Siloxanpolyoxyalkylencopolymeren. Erfindungsgemäß als Ausgangsmaterial geeignete organofunktionelle Polysiloxane sind beispielsweise in den DE-B 1 114 632, 1 190 176, 1 248 287, 2 543 638 oder in den DE-A 2 356 692, 2 445 648, 2 363 452, 2 427 273 oder 2 558 523 beschrieben. Die carbofunktionellen Endgruppen stellen vorzugsweise aliphatische, gegebenenfalls Heteroatome wie insbesondere Sauerstoff enthaltende Kohlenwasserstoffreste mit 1 bis 6 Kohlenstoffatomen dar, die mindestens eine Hydroxyl-, Mercapto- oder primäre bzw. sekundäre Aminogruppe aufweisen. Zu den bevorzugten carbofunktionellen Gruppen gehören primäre und sekundäre Hydroxylgruppen, sowie primäre und sekundäre Aminogruppen. Besonders bevorzugt sind solche Ausgangsverbindungen, die endständig primäre Hydroxylgruppen aufweisen. Die carbofunktionellen Gruppen können in den Ausgangsmaterialien beispielsweise in Form folgender carbofunktioneller Reste vorliegen :

$$-CH_2OH,\ -(CH_2)_4OH,\ -CH_2-O-CH_2-CH_2-OH,\ -CH_2-S-CH_2-OH_2-OH,$$

$$-CH_2-S-CH_2-CHOH-CH_2OH,\ -CH_2SH,\ -CH_2-S-CH_2-SH,$$

$$-CH_2-NH_2,\ -(CH_2)_4NH_2,\ -CH_2-NH-C_4H_9 \text{ oder } -CH_2-NH-C_6H_{11}.$$

Die organofunktionellen Polysiloxane weisen mindestens 2, vorzugsweise 6 bis 30, Struktureinheiten der Formel $-O-Si(R)_2-$ bei einem Molekulargewicht von 194 bis 12 000, besonders bevorzugt zwischen 400 und 3 000, auf. Wie bereits dargelegt, können in den erfindungsgemäß geeigneten Polysiloxanen in der Kette neben den genannten Struktureinheiten auch Polyoxyalkylen-, insbesondere Polyoxyethylen- und/oder Polyoxypropyleneinheiten, vorliegen. Die organofunktionellen Polysiloxane sind nach bekannten Verfahren zugänglich.

Erfindungsgemäß besonders gut geeignete organofunktionelle Polysiloxane sind beispielsweise folgende Verbindungen :

$$HO-CH_2-Si(CH_3)_2-O[Si(CH_3)_2-O]_{12}-Si(CH_3)_2-CH_2OH$$

$$HO-\underset{CH_3}{CH}-CH_2-[Si(CH_2)_3-O]_{11}-Si(CH_3)_2-CH_2-O-\underset{CH_3}{CH}-CH_2-OH$$

$$HO-CH_2-Si(CH_3)_2-O-Si(CH_3)_2-CH_2-OH$$

$HO-CH_2-Si(CH_3)_2-O-[Si(CH_3)_2-O]_{60}-Si(CH_3)_2-CH_2-OH$ oder

$n-C_4H_9-NH-CH_2-Si(CH_3)_2-O-[Si(CH_3)_2-O]_{18}-Si(CH_3)_2$

$CH_2-NH-n-C_4H_9$

Die erfindungsgemäß besonders bevorzugten Organopolysiloxane entsprechen der allgemeinen Formel

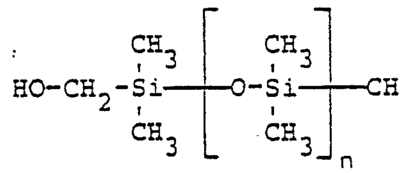

n = 5 bis 29.

Die freie, aromatische Isocyanatgruppen aufweisenden NCO-Polyester-Prepolymeren werden in an sich bekannter Weise durch Umsetzung der Reaktionspartner in der Schmelze oder in Lösung hergestellt. Das Äquivalentverhältnis von NCO-Gruppen zu aktiven Wasserstoffatomen (bevorzugt aus OH-Gruppen) ist in jedem Fall größer als 1, soll in der Regel zwischen 1,5 : 1 und 2,8 : 1 liegen. Selbstverständlich ist es möglich, einen noch größeren Überschuß an Polyisocyanat zu verwenden. Die Voraddukte haben je nach den gewählten Ausgangskomponenten im allgemeinen ölige bis wachsartige Konsistenz. Beträgt das NCO/OH-Verhältnis mehr als 2, so erhält man im wesentlichen nicht verlängerte Voraddukte, während NCO/OH-Verhältnisse von unter 2 eine Erhöhung der mittleren Molmasse der Voraddukte zur Folge haben. Es ist, wie schon erläutert, auch möglich, niedermolekulare Polyole (Molmassen bis 399) als Kettenverlängerungsmittel bei der Herstellung der Prepolymere anteilmäßig neben höhermolekularen Ausgangsverbindungen mitzuverwenden ; in diesem Fall erhält man ebenfalls höhermolekulare NCO-Voraddukte.

Sollen im erfindungsgemäßen Verfahren Produkte mit einer sehr geringen, bzw. praktisch ohne Gehalt an monomeren Polyaminen erhalten werden, so können die so erhaltenen NCO-Prepolymere noch einer Destillation unterworfen werden, bei der monomere Polyisocyanate entfernt werden. Dies kann z. B. vorteilhaft unter Verwendung eines Dünnschichtverdampfers geschehen.

In einer modifizierten Ausführungsform des erfindungsgemäßen Verfahren können auch aus nichtgedünnschichteten oder andersartig von Monomeren freigemachten NCO-Prepolymeren Polyamine ohne wesentlichen Gehalt an monomeren Polyaminen erhalten werden, indem man die im Patentanspruch unter c) beschriebenen Verbindungen, vorzugsweise niedermolekulare Diole, bei der Hydrolyse mitverwendet.

Für das erfindungsgemäße Verfahren werden als NCO-Verbindungen NCO-Prepolymere besonders bevorzugt, wie sie aus höhermolekularen Polyestern des durchschnittlichen Molmassenbereichs 1 000 bis 4 000, gegebenenfalls unter Mitverwendung gegenüber Isocyanaten reaktiven Gruppen aufweisenden Verbindungen mit « aktiven H-Atomen » der unter c) beschriebenen Art und überschüssigen aromatischen Diisocyanaten im effektiven Äquivalentverhältnis aktive-H-Gruppe/NCO-Gruppe von 1 : 1,5 bis 1 : 2,8, insbesondere 1 : 1,5 bis 1 : 2, erhalten worden sind. Es können auch Gemische von verschiedenen NCO-Prepolymeren im erfindungsgemäßen Verfahren eingesetzt werden.

Der Durchschnitts-NCO-Gehalt des oder der eingesetzten NCO-Prepolymeren beträgt im allgemeinen ca. 0,5 bis 11,5 Gew.-%, bevorzugt 1,7 bis 7,2 Gew.-%, ganz besonders bevorzugt 2,2 bis 6,5 Gew.-%.

Mittels des erfindungsgemäßen Verfahrens werden aus den freie aromatische Isocyanatgruppen, Urethangruppen und Polyestergruppierungen sowie gegebenenfalls weitere, der Isocyanatchemie entstammende Gruppen aufweisenden NCO-Verbindungen Urethangruppen, Polyestergruppierungen und gegebenenfalls entsprechende weitere Gruppierungen aufweisende, primäre, aromatische Polyamine zugänglich. Besonders kennzeichnend ist ihr Gehalt an Polyestersegmenten, die über Urethangruppierungen mit den aromatischen Polyisocyanatresten des Polyester-NCO-Prepolymers verknüpft sind.

Werden im erfindungsgemäßen Verfahren solche freie aromatische NCO-Gruppen aufweisende Verbindungen eingesetzt, die durch Umsetzung eines Gemisches aus Hydroxyestern und anderen, NCO-reaktive Gruppen aufweisende Verbindungen wie Ether- und/oder Acetal- und/oder Carbonat- und/oder Thioether und/oder Dialkylsiloxangruppen und/oder die Reste von Polybutadienen aufweisende, « H-aktive Gruppen » besitzende Verbindungen, wie z. B. Polyether-polyole, mit einem Überschuß eines aromatischen Polyisocyanats (bezogen auf die Menge der NCO-reaktiven Gruppen) entstehen, so enthalten die erfindungsgemäß hergestellten Produkte neben freien primären, aromatischen $NH_2$-, Urethan- und Polyestergruppierungen noch Ether- und/oder Acetal- und/oder Carbonat- und/oder Thioether- und/oder Dialkylsiloxan-Gruppen und/oder die Reste von Polybutadienen sowie gegebenenfalls Gruppen, die durch das aromatische Polyisocyanat bzw. NCO-Reaktionen eingeführt wurden wie z. B. Urethan-, Biuret-, Allophanat-, Uretdion-, Carbodiimid-, Isocyanurat- und/oder Amidgruppen und andere, typische, aus der Isocyanat-Chemie entstammende Gruppierungen.

Werden im erfindungsgemäßen Verfahren Gemische aus aromatische Urethangruppen und Polyestergruppierungen aufweisende, aromatische NCO-Verbindungen und anderen, aromatische NCO-Gruppen sowie daneben noch Ether- und/oder Acetal- und/oder Carbonat- und/oder Thioether- und/oder Dialkylsiloxangruppen und/oder die Reste von Polybutadienen und/oder Urethan- und/oder Biuret- und/oder Allophanat- und/oder Uretdion- und/oder Isocyanurat- und/oder Harnstoffgruppen enthaltenden Verbindungen eingesetzt, so werden Gemische aus aromatischen, primäre $NH_2$-, Urethan- und Estergruppen aufweisenden Verbindungen und anderen, primäre aromatische $NH_2$-Gruppen sowie daneben noch Ether- und/oder Acetal- und/oder Carbonat- und/oder Thioether- und/oder Dialkylsiloxangruppen und/oder Biuret- und/oder Allophanat- und/oder Uretdion- und/oder Isocyanurat- und/oder Harnstoffgruppen aufweisenden Verbindungen enthalten.

Durch Nebenreaktionen können in allen Fällen auch zusätzliche Gruppen entstehen, z. B. Harnstoffgruppen aus bereits hydrolisierten NCO-Gruppen mit frischen NCO-Verbindungen sowie Amidgruppen und Hydroxylgruppen durch Reaktion der primären Aminogruppen mit Estergruppen. Durch das erfindungsgemäße Verfahren wird diese Nebenreaktion jedoch weitestgehend zurückgedrängt.

Die Menge der in den Polyaminen (maximal) enthaltenden aromatischen $NH_2$-Gruppen entspricht der Menge der NCO-Gruppen in den NCO-Verbindungen, also etwa 0,17 bis 3,83 Gew.-%, bevorzugt etwa 0,57 bis 2,40 Gew.-% $NH_2$.

Hydrolyse-Verfahren ohne Beimischung aktiver H-Atome aufweisender Verbindungen zum basischen Medium

Im erfindungsgemäßen Verfahren wird die NCO-Verbindung als Startkomponente in der Regel ohne Lösungsmittel verwendet. Es können jedoch z. B. zur Viskositätserniedrigung auch Lösungen von NCO-Verbindungen (NCO-Prepolymeren) in NCO-inerten Lösungsmitteln, die vorzugsweise auch wassermischbar sind, verwendet werden. Geeignete Lösungsmittel in diesem Sinne sind z. B. Dimethoxyethan, Diethylenglykoldimethylether, Dioxan oder Tetrahydrofuran ; weniger geeignete Lösungsmittel in diesem Sinne sind z. B. aliphatische Kohlenwasserstoffe, chlorierte aliphatische Kohlenwasserstoffe, sowie gegebenenfalls chlorierte und/oder nitrierte Aromaten. Bevorzugt werden die NCO-Verbindungen jedoch dann als Lösungen in den o. g. Lösungsmitteln verwendet, wenn es sich um feste oder im Bereich von 20 bis 80 °C unschmelzbare, schwer schmelzbare oder zähflüssige NCO-Prepolymere handelt. Werden flüssige NCO-Verbindungen ohne Lösungsmittel im erfindungsgemäßen Verfahren eingesetzt, haben sie vorteilhafterweise eine Temperatur von z. B. 20 bis 80 °C, bevorzugt von 40 bis 70 °C, um ihre Viskosität niedrig zu halten.

Werden die NCO-Verbindungen in gelöster Form eingesetzt, so beträgt die bevorzugte Temperatur 20 bis 40 °C, höchstens jedoch die dem Siedepunkt des betreffenden Lösungsmittels entsprechende Temperatur.

Werden die NCO-Verbindungen als Lösungen verwendet, so können z. B. auf 100 Teile Lösungsmittel 1 bis 400 Teile NCO-Prepolymer eingesetzt werden.

Die Vermischung von NCO-Verbindungen und dem basischen Medium soll vorzugsweise bei einer möglichst niedrigen Temperatur der vermischten Reaktionslösung vorgenommen werden, um Nebenreaktionen möglichst auszuschließen. Die Temperatur in der Reaktionsmischung der Komponenten sollte möglichst unter 100 °C, besser unterhalb von 70 °C, vorzugsweise jedoch unterhalb von 40 °C, liegen.

Es wird daher vorzugsweise die Temperatur des basischen, niederviskosen Mediums bereits vor der Umsetzung möglichst tief gewählt, z. B. —25 bis +40 °C, bevorzugt 0 bis 25 °C. Zusätzlich kann während der Reaktion weiter gekühlt werden, um die Reaktionstemperatur möglichst im optimalen Bereich zu halten. Die zulässigen Reaktionstemperaturen hängen jedoch auch von der Art der Vermischung und Reaktionsführung ab.

Als erfindungsgemäßes basisches Medium zur NCO-Hydrolyse wird im vorliegenden Verfahren im allgemeinen eine wäßrige Mischung oder Lösung von Basen verwendet. Die minimale Menge an Wasser beträgt dabei die stöchiometrisch notwendige Menge von 1 Mol Wasser pro 1 Mol NCO.

Geeignete Basen sind z. B. Alkalihydroxide, Erdalkalihydroxide, niedermolekulare Alkalisilikate und -aluminate, und organische Ammoniumhydroxide, z. B. Tetraalkylammoniumhydroxide. Besonders bevorzugt sind Natrium- und Kaliumhydroxid. Es können als Basenkonzentration z. B. 1 Teil Base auf 1 bis 100 Teile Wasser verwendet werden.

Möglich, aber weniger bevorzugt ist die Verwendung von weiteren organischen Lösungsmitteln, die vorzugsweise mit Wasser mischbar sind, z. B. Dioxan, Tetrahydrofuran und Dimethoxyethan. Beispielsweise können auf 100 Teile Wasser 10 bis 1 000 Teile Cosolvens mitverwendet werden.

Die Reaktion der NCO-Verbindungen mit den Basen kann nach verschiedenen Ausführungsformen durchgeführt werden.

In einer diskontinuierlichen Ausführungsform wird die NCO-Gruppen aufweisende Verbindung langsam mittels eines Tropftrichters oder durch z. B. maschinelle Einspritzung mit einer Düse in das basische Medium eingeführt, wobei durch intensives Rühren eine möglichst gute Verteilung angestrebt

wird. Die Dauer der Einführung der NCO-Verbindungen richtet sich nach der Wärmetönung der Reaktion, wobei durch Kühlung dafür Sorge getragen werden muß, daß die Temperatur der Vorlage im allgemeinen nicht die oben angeführten Temperaturschranken, im diskontinuierlichen Fall etwa 40 °C, vorzugsweise 20 °C, übersteigt. Dies ist besonders wichtig im Falle von z. B. tri- und höherfunktionellen NCO-Prepolymeren, während im Falle eines difunktionellen Prepolymers ein kurzzeitiges Ansteigen der Temperatur auf ca. 60 bis 70 °C tolerierbar ist. Im allgemeinen beträgt die Einführdauer ca. 5 bis 140 Minuten, bevorzugt 30 bis 120 Minuten.

Üblicherweise beträgt das Verhältnis der vorgelegten und einzuführenden Flüssigkeitsvolumina etwa 1 : 1 bis 1 : 3, dies gilt natürlich nicht, wenn, was möglich, aber nicht bevorzugt ist, feste NCO-Prepolymere in fester, möglichst feindisperser Form, zugegeben werden.

In einer für die großtechnische Produktion besonders geeigneten kontinuierlichen Ausführungsform werden NCO-Verbindungen (gegebenenfalls als Lösung) und die wäßrige Base getrennt einem gemeinsamen Reaktionsraum zudosiert, mittels z. B. eines Durchflußmischers intensiv vermischt, so zur Reaktion gebracht und aus dem Mischraum schnell ausgetragen. Die Dosierung der Komponenten kann z. B. über graduierte Tropftrichter oder mittels einer Kolben- und/oder Membran-Dosierpumpe oder einer anderen maschinellen Dosiervorrichtung vorgenommen werden. Es ist bei der kontinuierlichen Dosierung bevorzugt, beide Komponenten in sehr kurzer Zeit (Sekunden oder Bruchteilen davon) mit einer geeigneten, gegebenenfalls maschinell betriebenen Vorrichtung zu vermischen, zur Reaktion zu bringen und aus dem Reaktionsraum auszutragen.

Bei den geeigneten Durchflußmischern unterscheidet man zwischen den statischen Mischern mit festen Einbauten und dynamischen Mischern mit beweglichen Einbauten nach dem Rotor/Stator-Prinzip. Sie können gegebenenfalls geheizt oder gekühlt werden.

Die erforderliche Mischenergie wird bei den statischen Mischern über die Pumpen aufgebracht, während bei den dynamischen Mischern ein separater Motor den Rotor antreibt.

In allen Fällen hängt der Reaktionsumsatz der Isocyanatgruppen auch von der aufgebrachten Leistung bzw. den entsprechend erzeugten Scherkräften, d. h. von der feinen Dispergierung der NCO-Verbindung im basischen Medium, ab.

Im allgemeinen werden die Reaktionskomponenten bei etwa — 25 bis + 60 °C dem Durchflußmischer zugeführt. Infolge der Scherkräfte beim Einsatz eines bevorzugt eingesetzten dynamischen Mischers und in Abhängigkeit von der entstehenden Reaktionswärme steigen die Reaktionstemperaturen auf ca. 50 bis 150 °C an. Im allgemeinen ist es jedoch zweckmäßig, die Temperatur (gegebenenfalls durch Kühlung des Mischaggregats) unter 100 °C, vorzugsweise unter 80 °C, zu halten.

Werden weitere Co-Lösungsmittel verwendet, so wird die Temperatur unter deren Siedepunkt gehalten, wenn er niedriger als der von Wasser ist. Die Reaktionskomponenten werden in möglichst dünnviskoser Form und bei jeweils möglichst niedriger Temperatur der Dosierkomponenten dem Durchflußmischer zugeführt. Dabei können die Einzelkomponenten, wie bereits erwähnt, auf die angegebenen Temperaturen erwärmt bzw. gekühlt werden. Wegen der hohen Durchmischung, schnellen Reaktion und Austragung des gebildeten Reaktionsgemisches ist die Temperatur im kontinuierlichen Verfahren nicht so kritisch wie im diskontinuierlichen Verfahren.

Die Mengenäquivalente der als Basen vorzugsweise verwendeten Alkali-, Erdalkali- und organischen Ammoniumhydroxide liegen zwischen 0,3 : 1 bis 2 : 1, bezogen auf ein NCO-Äquivalent. Bei kontinuierlicher Reaktion können auch Lösungsmittel wie Isopropanol oder tert.-Butanol verwendet werden.

Wenn ein Produkt ohne oder mit nur geringfügiger Vorverlängerung über Harnstoffgruppen erhalten werden soll, so wird das $OH^{\ominus}$/NCO-Verhältnis von 1,0 : 1 bis 2 : 1, besonders 1,1 : 1 bis 1,8 : 1, bevorzugt, d. h. nach vollständiger Reaktion aller NCO-Gruppen verbleibt noch ein überschuß an Base.

Es können jedoch auch geringere Mengen an Basen verwendet werden. Dies ist dann der Fall, wenn über Harnstoffgruppen erfolgte Vorverlängerung der Polyamine nicht stört bzw. sogar erwünscht ist, was für manche Anwendungszwecke der Fall sein kann. Ein Verhältnis von 0,3 : 1 bis 1,0 : 1,0, bevorzugt 0,6 : 1 bis 1,0 : 1,0, besonders bevorzugt 0,8 : 1 bis 1 : 1,0, erlaubt eine einwandfreie Durchführung der Reaktion.

Selbstverständlich lassen sich auch noch höhere bzw. niedrigere $OH^{\ominus}$/NCO-Verhältnisse verwenden. Bei einem Verhältnis von kleiner 0,3 : 1 wird jedoch wegen des hochpolymeren Charakters des Produkts die Aufarbeitung sehr langwierig, während ein $OH^{\ominus}$ : NCO-Verhältnis von größer 2 : 1 zwar möglich ist, aber keine Vorteile bringt.

Der Gesamtbereich $OH^{\ominus}$/NCO liegt praktischerweise zwischen 0,3 : 1 und 2 : 1, vorzugsweise 0,6 bis 1,8, besonders bevorzugt 0,8 bis 1,1. Zur Erleichterung der Reaktion der Isocyanatgruppen mit der wäßrigen Base können verschiedene Zusätze verwendet werden. So können zum Homogenisieren ein oder mehrere handelsübliche Emulgatoren zugesetzt werden, z. B. in Mengen von 0,01 bis 1 Gew.-% Teile auf 100 Teile Reaktionsmischung.

Weiterhin ist es möglich, zur Erhöhung der Reaktionsgeschwindigkeit weitere katalytisch wirkende Verbindungen zuzugeben. Solche katalytisch wirkenden Verbindungen sind z. B. tertiäre Aminogruppen aufweisende Verbindungen, wie sie in der PU-Chemie allgemein bekannt sind und bei der Herstellung von Polyurethanschaumstoff zur Beschleunigung der NCO-Wasser-Reaktion eingesetzt werden.

Als Katalysatoren sind tertiäre Amine geeignet, wie z. B. Triethylamin, Tetramethylethylendiamin, Tretramethylhexylendiamin, permethyliertes Diethylentriamin, permethyliertes Triethylentetramin, 1,4-Diaza-2,2,2-bicyclooctan und Bis-2-dimethylaminoethyl-ether. Diese Verbindungen werden in Mengen von etwa 0,01 bis 10 Gew.-%, bezogen auf das Isocyanat, eingesetzt.

Nach der vollständigen Umwandlung aller NCO-Gruppen ist es gegebenenfalls möglich, vor der weiteren Behandlung Wasser oder ein organisches, mit Wasser mischbares Lösungsmittel hinzuzufügen. Geeignete Lösungsmittel solcher Art sind niedere Alkohole wie Methanol, Ethanol, Isopropanol, Ether wie Tetrahydrofuran, Dioxan, Dimethoxyethan oder Diethylenglykoldimethylether.

Modifiziertes Hydrolyseverfahren unter Beimischung aktiver H-Atome enthaltender Verbindungen zum basischen Medium

Als dem basischen Medium beizumischende, gegenüber NCO reaktive Gruppen enthaltende Verbindungen « mit aktiven H-Atomen » kommen alle diejenigen Hydroxy-, Thiol-Gruppen und weniger bevorzugt Aminogruppen enthaltenden Verbindungen in Frage, wie sie als gegebenenfalls anteilig mitzuverwendende Aufbaukomponenten der im erfindungsgemäßen Verfahren einsetzbaren NCO-Verbindungen genannt und im allgemeinen als Kettenverlängerungsmittel oder Vernetzer bezeichnet werden.

Ebenfalls geeignet, aber weniger bevorzugt sind Verbindungen, die nur eine gegenüber NCO-Gruppen reaktive Gruppe mit reaktiven H-Atomen aufweisen wie z. B. Methanol, Ethanol, Propanole, Butanole, Hexanole, Cyclohexanol, primäre Butylamine, Hexylamine, Cyclohexylamin, Stearylamin, Anilin, Naphthylamine.

Selbstverständlich können auch Mischungen verschiedener, H-aktive Gruppen besitzender Verbindungen, gegebenenfalls auch unterschiedlicher Funktionalität, im erfindungsgemäßen Verfahren eingesetzt werden, z. B. Mischungen von Diolen und Triolen oder Diolen und Hydroxyaminen.

Bevorzugt als H-aktive Gruppen enthaltende Verbindungen werden im erfindungsgemäßen Verfahren Hydroxygruppen besitzende Verbindungen eingesetzt. Besonders bevorzugt sind di- bis tetrafunktionelle Verbindungen der Molmasse 18 bis ca. 399, besonders bevorzugt niedermolekulare Verbindungen der Molmasse 62 bis 250 ; insbesondere solchen mit primären Hydroxygruppen, wie z. B. Ethandiol, Butandiol-1,4, Hexandiol-1,6, Di-, Tri-, Tetraethylenglykol, Polyethylenglykole, N-Methyl-diethanolamin, Trimethylolethan, Trimethylolpropan, Addukte aus Ethylenoxid und z. B. Trimethylolpropan, Triethanolamin, Pentaerythrit etc.

Möglich, aber weniger bevorzugt ist die Verwendung von weiteren organischen Lösungsmitteln, die vorzugsweise mit Wasser mischbar sind, z. B. Dioxan, Tetrahydrofuran und Dimethoxyethan. Beispielsweise können auf 100 Teile Wasser 10 bis 1 000 Teile Cosolvens mitverwendet werden.

Die Reaktion der NCO-Verbindungen mit dem basischen Medium aus Wasser, der Base, der « H-aktive Gruppen » besitzenden Verbindung sowie gegebenenfalls dem Cosolvens kann nach verschiedenen Ausführungsformen durchgeführt werden, die identisch mit dem Ausführungsformen (A-C) ohne Mitverwendung aktiver H-Atome enthaltender Verbindungen im basischen Medium sind.

Die Struktur der beim erfindungsgemäßen Verfahren erhaltenen Verfahrensprodukte ist in hohem Maße abhängig vom Verhältnis Wasser : Base : NCO-reaktive Verbindung und deren Verhältnis zur NCO-Verbindung. Weiterhin werden die Produkte auch von Verfahrensparametern wie z. B. Rührgeschwindigkeit stark beeinflußt.

Geht man davon aus, daß im basischen Medium keine « H-aktive Gruppen » aufweisende Verbindung vorliegt (wie es jedoch der hier geschilderten Variante des erfindungsgemäßen Verfahrens nicht entspricht und hier nur zur Erklärung angeführt wird), so wird mit einem Base/NCO-Verhältnis von ca. 0,3-1 ein aminisches Produkt erhalten, das mit zunehmendem Base/NCO-Verhältnis immer weniger Harnstoffeinheiten enthält und sich in seiner Struktur immer mehr dem Produkt nähert, wie es durch vollständige Konversion aller NCO-Gruppen in $NH_2$-Gruppen erhalten wird.

Nun ist es aber keineswegs so, daß bei einem Base/NCO-Verhältnis von $\geq 1$ keine Harnstoffgruppen mehr gebildet werden. Durch eine Reihe von Faktoren (Temperatur, Rührgeschwindigkeit, Inhomogenitäten der Basen-Verteilung infolge eines Viskositätsaufbaus etc.) werden nämlich auch bei einem Base/NCO-Verhältnis von $\geq 1$ Harnstoffeinheiten in einer Nebenreaktion gebildet. Dies führt bei Verwendung von monomerfreien NCO-Verbindungen zur Vorverlängerung, bei monomerhaltigen vorwiegend zur Bildung von niedermolekularen Harnstoffverbindungen sowie gegebenenfalls auch zu über Harnstoffeinheiten vorverlängerten aminischen Produkten. Es hat sich erwiesen, daß bei diskontinuierlicher Verfahrensweise dasjenige Base/NCO-Verhältnis, ab dem Harnstoffbildung praktisch nicht mehr auftritt, bei ca. 1,15-1,30 liegt. Nun kann für jedes Äquivalent Base ein Äquivalent « H-aktive Gruppen » besitzende Verbindung eingesetzt werden, so daß annähernd jede NCO-Gruppe, die nicht in eine $NH_2$-Gruppe umgewandelt wird, mit einer « H-aktiven Gruppe », z. B. einer OH-Gruppe, reagiert. Die Menge der « H-aktive Gruppen » besitzenden Verbindung ist so, daß das Verhältnis der Summe der Äquivalente aus Base und « H-aktive Gruppen » besitzender Verbindungen zu Äquivalenten an Isocyanatverbindung vorzugsweise ca. 1,15-1,30 oder größer ist, wenn Harnstoffbildung weitgehend ausgeschlossen sein soll ; die untere Grenze stellt in der Praxis das Verhältnis $\geq 0{,}3$ dar, kann prinzipiell aber auch $\leq 0{,}3$ sein, was jedoch aus praktischen Gründen weniger bevorzugt ist.

Die Menge an zugesetzten, « H-aktive Gruppen » aufweisenden Verbindungen bzw. das Verhältnis zwischen « H-aktive Gruppen » aufweisenden Verbindungen und Base richtet sich nach der Art der

eingesetzten NCO-Verbindungen und dem mit der Zugabe der « H-aktive Gruppen » aufweisenden Verbindungen beabsichtigten Zweck.

Ist es z. B. beabsichtigt, bei der Herstellung eines Amins aus einem NCO-Prepolymer, das noch geringe Reste monomeres Polyisocyanat, z. B. 1 bis 2 Gew.-%, enthält, das Mitentstehen niedermolekularen Polyamins (aus diesem monomeren Polyisocyanat) zu verhindern, so werden natürlich geringere Mengen an « H-aktive Gruppen » aufweisenden Verbindungen benötigt, als wenn ein NCO-Semiprepolymer, d. h. ein Gemisch aus NCO-Prepolymer und überschüssigen Mengen an freien Polyisocyanaten, in ein Gemisch mehrerer Amine umgewandelt werden soll oder wenn aus einer linearen Diisocyanatverbindung durch Umsetzung mit einer tri- oder höherfunktionellen, « H-aktive Gruppen » aufweisenden Verbindung ein tri- oder höherfunktionelles aromatisches Polyamin hergestellt werden soll. Ebenso wird weniger an diesen « H-aktive Gruppen » aufweisenden Verbindungen benötigt, wenn lediglich die Funktionalität der resultierenden aromatischen Amine bezüglich der zugrundeliegenden Isocyanatverbindungen erhöht oder erniedrigt werden soll (z. B. eine Funktionalitätserhöhung von 2,0 auf 2,3). Insgesamt bewegt sich das Verhältnis von Basenäquivalenten zu « H-aktiven Gruppen » im Bereich 1 : 9,9 bis 9 : 0,1, bevorzugt 1 : 4 bis 9 : 1.

Dabei ist es bei allen Verfahrensvarianten möglich, dem basischen Medium Beimengungen zuzusetzen, wie sie für den beabsichtigten Verwendungszweck geeignet sind. Dies können (im allgemeinen lösliche) Antistatika, Antifoulingmittel, Hydrophobiermittel, Weichmacher, Stabilisatoren, Pigmente etc. sein. Bevorzugt werden diese Beimengungen jedoch nach der Vermischung mit der NCO-Verbindung zugesetzt.

Aufarbeitung des Hydrolyseansatzes

Die durch das Vermischen der NCO-Verbindungen mit dem basischen Medium erhaltenen, Carbamatgruppen enthaltenden Verbindungen werden erfindungsgemäß direkt in Aminogruppen enthaltende Verbindungen dadurch umgewandelt, daß die Carbamatgruppen aufweisende Verbindungen enthaltende Reaktionsmischung zur Gewinnung des Amins entweder a) mit einer mindestens äquivalenten Menge (bezogen auf die Menge an eingesetzter Base) eines Protonendonators behandelt wird (Verfahren A), oder b) thermisch behandelt wird (Verfahren B) oder c) mit einem Lösungsmittel extrahiert wird (Verfahren C). Alle drei Verfahren können sowohl kontinuierlich als auch diskontinuierlich duchgeführt werden. Ebenso ist es bei beiden Verfahrensvarianten, insbesondere jedoch bei B), günstig, Vakuum anzulegen, wodurch die Zerlegung der Carbamatgruppen aufweisenden Verbindungen begünstigt wird. Die Verfahren können auch untereinander kombiniert werden.

Verfahren A :

Behandlung mit einer mindestens äquivalenten Menge eines Protonendonators

Die Behandlung des Carbamatgruppen, Urethangruppen, Polyestergruppierungen sowie gegebenenfalls weitere Gruppen aufweisenden Reaktionsgemisches (im folgenden kurz « Carbamatmischung » genannt) mit einer mindestens äquivalenten Menge eines Protonendonators erfolgt mit einer in einem unlöslichen, polymeren Skelett fixierten Säure, d. h. z. B. einem Ionenaustauscher (Verfahren A 1) oder einer flüssigen oder wasserlöslichen Mineral- oder organischen Säure (Verfahren A 2). Beide Verfahrensmodifikationen können sowohl (nicht bevorzugt) kombiniert als auch kontinuierlich oder diskontinuierlich durchgeführt werden.

Verfahrensvariante A 1

Als als Protonendonatoren einsetzbare (saure) Ionenaustauscher im erfindungsgemäßen Verfahren sind alle Stoffe geeignet, die in einem polymeren unlöslichen Grundgerüst bewegliche acide Wasserstoffatome besitzen. Besonders geeignet als polymere Säuren sind im erfindungsgemäßen Verfahren Ionenaustauscherharze, die als polymere Basis ein Styrol/Divinylbenzol-Skelett besitzen, an das Sulfonsäuregruppen als saure Funktionen gebunden sind oder auch Ionenaustauscher mit polymerer Acrylsäure mit COOH-Gruppen.

Für das erfindungsgemäße Verfahren ist es unwesentlich, ob zur vorgelegten Carbamatmischung das saure Ionenaustauscherharz zugegeben (Verfahrensvariante 1) oder ob umgekehrt vorgegangen wird (Verfahrensvariante 2). Ionenaustauscherharz und Carbamatmischung werden in dem Maße miteinander vereinigt, wie es die Heftigkeit der Gasentwicklung und die Dimensionierung der Apparatur zuläßt (10 bis 300 Minuten). Diese Gasentwicklung tritt jedoch erst nach Neutralisierung eines etwaigen Basenüberschusses auf. Bei der Vereinigung beider Komponenten tritt keine oder nur geringe Temperaturerhöhung auf ; ein gegebenenfalls durch externes Heizen einzustellender Temperaturbereich von 10 bis 70 °C erwies sich als günstig. Es wird solange Ionenaustauscher zugesetzt, bis keine Gasentwicklung mehr zu erkennen ist. kurzzeitiges Erwärmen auf 60 bis 100 °C treibt gelöstes Kohlendioxid aus. Pro Alkaliäquivalent werden äquivalente oder mindestens geringfügig überschüssige Mengen, vorzugsweise aber 1,01 bis 1,8 Äquivalente von dem sauren Ionenaustauscherharz entstammende Wasserstoffionen eingesetzt.

Das umgekehrte Verfahren — Ionenaustauscher vorgelegt — ist v.a. dann zu bevorzugen, wenn die Reaktionsdaten bekannt sind, sowie bei kontinuierlicher Arbeitsweise. Am Endpunkt der Reaktion ist das Reaktionsgemisch basisch, wie es dem Gehalt an freiem Amin und dessen Basenstärke entspricht.

Die einfache Aufarbeitung gestaltet sich wie folgt : Die flüssige, das aminische, flüssige oder gelöste Verfahrensprodukt enthaltende Phase und der beladene Ionenaustauscher (Festphase) werden durch Filtration voneinander getrennt. Bevorzugt wird der beladene Ionenaustauscher mit einem geeigneten Lösungsmittel (z. B. Methanol, Ethanol, Dioxan) gewaschen und mit dem 1. Filtrat vereinigt.

Nach dem Abdestillieren des Solvens (z. B. 17 mbar/100 °C und 0,1 bis 1,3 mbar/100 °C) hinterbleiben die Verfahrensprodukte als farblose bis hellgelbe Flüssigkeiten oder als plastische oder kristalline Feststoffe.

Eine kontinuierliche Verfahrensform dieses Verfahrens bedient sich einer stationären Anordnung von polymerem Säurematerial. Geeignet ist z. B. eine mit saurem Ionenaustauscherharz gefüllte Säule aus z. B. Glas, durch die das Carbamatgemisch gedrückt wird und/oder durch die Schwerkraft fließt, wobei dieser Vorgang gegebenenfalls mehrmals wiederholt werden kann. Durch geeignete Ventilierung muß das Kohlendioxyd abgelassen werden. Nach vollständiger Bildung des aminischen Produkts wird dieses durch z. B. Destillation aus der Produktphase abgetrennt. Die beladenen Säulen werden im Anschluß an die Carbamatgemisch-Zersetzung mit z. B. Methanol nachgewaschen und diese Waschphase gegebenenfalls mit der Produktphase vereinigt. Nach dieser Extraktion wird nach bekannten Methoden das Ionenaustauscherharz regeneriert.

Vorteilhaft ist die Verwendung einer « Ionenaustauscherbatterie », in der in getrennten, jedoch zusammenschaltbaren Säulen gleichzeitig die acidolytische Zersetzung, die Solvensextraktion und die Regeneration des Säulenmaterials vorgenommen werden kann.

Verfahren A 2

In Verfahren A 2 wird eine flüssige oder feste, wasserlösliche organische oder Mineralsäure eingesetzt. Bevorzugt wird mit genauen Äquivalenten an Säure (bezogen auf die Gesamtmenge an Basen) gearbeitet, doch ist auch die Verwendung eines Säureüberschusses, wie sie in DE-A 2 948 419 beschrieben wird, möglich. Verfahren A 2 wird in zwei Modifikationen durchgeführt, wobei Verfahrensmodifikation A 2/2 vorteilhafterweise auch kontinuierlich durchgeführt werden kann.

Verfahrensmodifikation A 2/1

Die Carbamatreaktionsmischung wird zugetropft, die Säurekomponente vorgelegt.

Als Säuren kommen starke Säuren zur Anwendung, z. B. gegebenenfalls wäßrige Mineralsäuren wie Salzsäure, Schwefelsäure, verdünnte Salpetersäure, Phosphorsäure ; möglich ist auch die Verwendung von starken organischen Säuren wie Oxalsäure, Ameisensäure oder Essigsäure, oder ähnlichen starken organischen Säuren.

Bevorzugt werden Salzsäure und Schwefelsäure verwendet, besonders bevorzugt ist Schwefelsäure. Die vorgelegte Säure hat zweckmäßigerweise eine Temperatur von 0 bis 20 °C. Unter Rühren wird die Carbamat-Reaktionsmischung in einem Zeitraum von 1 Minute bis 6 Stunden, bevorzugt 30 Minuten bis 2 Stunden, zugegeben, wobei vorteilhaft die Temperatur der Reaktionsmischung durch externe Kühlung unter 25 °C zu halten ist. Die Zeitdauer der Carbamatzugabe ist abhängig von der Heftigkeit der sofort einsetzenden Gasentwicklung.

Das Säure/Basen-Äquivalentverhältnis beträgt etwa 1 : 1, d. h. pro Äquivalent Base wird 1 Äquivalent Protonen eingesetzt (etwa äquivalente Mengen). Das Reaktionsgemisch ist dann etwa neutral bis basisch, wie es dem pH-Wert eines Gemisches aus Alkalisalzen bzw. Aminsalzen mit einer aromatischen Aminoverbindung entspricht. 5 bis 30 Minuten wird bei 20 °C weitergerührt.

Bei einer flüssigen Aminoverbindung wird die Aufarbeitung z. B. so vorgenommen, daß der gesamte Reaktionsansatz durch Destillation von flüchtigen Anteilen befreit (Destillation z. B. bei 15 bis 700 Torr und 40 bis 150 °C Badtemperatur), die ausgefallenen Salzanteile durch Filtration (z. B. mit einer beheizbaren Drucknutsche) abgetrennt und das verbliebene aminische Produkt z. B. innerhalb 2 Stunden bei 0,013 bis 20 mbar und 80 bis 150 °C von Spuren flüchtiger Komponenten befreit wird.

Fällt die Aminoverbindung fest an, so wird sie abfiltriert und wenn nötig, nach üblichen Methoden wie Umkristallisation oder Umfällung, gereinigt.

Verfahrensmodifikation A 2/2

Methode A 2/2 ist gegenüber Methode A 2/1 bevorzugt.

Hierbei werden die Carbamatkomponente und die Säurekomponente getrennt einem gemeinsamen Reaktionsraum zudosiert. Bevorzugt wird dabei so verfahren, daß in gleichen Zeiträumen gleiche Äquivalente an Basen und Säuren den Reaktionsraum erreichen, so daß Ungleichgewichte zwischen beiden Reaktionskomponenten möglichst vermieden werden.

Im übrigen gilt das, was über die einzuhaltenden Temperaturbereiche und über die Aufarbeitung bei Methode A 2/1 gesagt wurde, auch hier. Die Reaktionszeiten sind im allgemeinen, wie sie auch bei

Methode A 2/1 angegeben werden. Es ist jedoch auch möglich — und bei einer kontinuierlichen Ausführungsform bevorzugt — beide Komponenten in sehr kurzer Zeit (Sekunden oder Bruchteilen davon) mit einer geeigneten, maschinell betriebenen Vorrichtung zu vermischen und zur Reaktion zu bringen.

Wird mit einem Säureüberschuß gearbeitet, so wird die Aufarbeitung wie in DE-A 2 948 419 beschrieben, durchgeführt, d. h. der Säureüberschuß wieder mit Basen neutralisiert.

Im allgemeinen sind die im folgenden beschriebenen Verfahren B und C gegenüber Verfahren A bevorzugt :

Verfahren B :

(thermische Behandlung)

Durch thermische Behandlung bis etwa 200 °C erfolgt die Hydrolyse der Carbamatgruppen in Aminogruppen und Salze der Kohlensäure, wobei aus den Carbamatgruppen aufweisenden Verbindungen entsprechende Polyamine entstehen. Die thermische Behandlung kann kontinuierlich und diskontinuierlich durchgeführt werden. Sie kann ohne (B/1) bzw. mit Anlegen von Vakuum (B/2) erfolgen.

In einer diskontinuierlichen Ausführungsform des erfindungsgemäßen Verfahrens, das bevorzugt im gleichen Reaktionsgefäß und im direkten Anschluß an die Herstellung der Carbamatgruppen aufweisenden Verbindungen durchgeführt wird, wird das Carbamatgruppen aufweisende Verbindungen enthaltende Reaktionsgemisch bis 360 Minuten, bevorzugt 5 bis 180 Minuten, besonders bevorzugt 30 bis 120 Minuten, mit einer 60 bis 200 °C, bevorzugt 100 bis 160 °C, heißen Wärmequelle (z. B. Dampf oder Ölbad, sowie Überleiten auf z. B. beheizte Platten) auf ≥ 40 °C, bevorzugt ≥ 60 °C, besonders bevorzugt ≥ 80 °C und maximal etwa 200 °C erhitzt. Besonders günstig ist der Bereich von etwa 60 bis 100 °C, bevorzugt 80 bis 100 °C, wie er sich beim Rückflußkochen überschüssigen Wassers und evtl. vorhandenen Lösungsmittels (gegebenenfalls unter Anlegen von Vakuum, einstellt. Bei dieser Wärmebehandlung kann, vor allem gegen Ende der Wärmebehandlung, etwas Kohlendioxid entweichen.

Bei dieser Wärmebehandlung entstehen Kohlensäuresalze, wie gegebenenfalls verschieden hydratisierte Carbonate und Hydrogencarbonate der eingesetzten Basen. Zum Beispiel kann Kaliumhydrogencarbonat, $KHCO_3$, entstehen.

Besteht der Lösungsmittelanteil der der Wärmebehandlung unterworfenen, carbamathaltigen Reaktionsmischung aus Wasser oder zu einem überwiegenden Anteil aus Wasser und zu einem kleineren Anteil aus einem organischen Lösungsmittel oder zu einem geringeren Anteil aus Wasser und zu einem größeren Anteil aus einem protischen oder aprotisch-dipolaren Solvens (z. B. Methanol, Dimethylformamid) mit großem Salzlösevermögen, so bleibt das Kohlensäuresalz weitgehend in Lösung.

Besteht der Lösungsmittelanteil der der Wärmebehandlung unterworfenen carbamatgruppenhaltigen Reaktionsmischung aus einem geringeren Anteil Wasser und einem größeren Anteil eines Lösungsmittels mit geringerem Salzlösevermögen (z. B. n-Butanol, i-Butanol, Tetrahydrofuran) so können die Kohlensäuresalze zu einem Teil bereits ausfallen und abfiltriert werden.

Im Anschluß an die Wärmebehandlung wird das Lösungsmittel abdestilliert. Dies kann bei Normaldruck oder bei einem Vakuum von z. B. 0,2 bis 950 mbar vorgenommen werden. Die Innentemperatur richtet sich nach den Siedepunkten und den Mischungsverhältnissen der verwendeten Lösungsmittel, sie beträgt vorzugsweise 80 bis 100 °C. Es ist zweckmäßig, bei nur noch geringen Resten flüchtiger Stoffe die Temperatur unter 100 °C zu senken und Vakuum anzulegen, z. B. 0,01 bis 6 mbar.

Es ist möglich, Reste von Wasser durch Zusatz eines mit Wasser ein Azeotrop bildenden Lösungsmittels (z. B. Toluol) und erneute Destillation unter gegebenenfalls erniedrigtem Druck zu entfernen. Von dem 20 °C oder wärmeren, bevorzugt 60 bis 90 °C warmen, flüssigen Polyaminhaltigen Destillationsrückstand wird das Kohlensäuresalz z. B. durch Filtration, Zentrifugieren, Abdekantieren oder ähnliche Maßnahmen abgetrennt. Vorzugsweise erfolgt die Abtrennung mit einer gegebenenfalls beheizbaren Drucknutsche bei z. B. etwa 0,5 bis 4 bar Überdruck.

Wenn gewünscht, kann der Filterrückstand, gegebenenfalls nach Vereinigung mit weiteren Filterrückständen gleicher Art, mit einem geeigneten Lösungsmittel, welches das Amin löst und das Kohlensäuresalz nicht löst, zur Gewinnung geringer Restmengen an Aminprodukt extrahiert werden. Geeignete Lösungsmittel sind etwa die halogenierten, insbesondere chlorierten Alkane wie z. B. Trichlormethan und flüssige aromatische Kohlenwasserstoffe wie z. B. Toluol.

Die diskontinuierliche Ausführungsform des erfindungsgemäßen Verfahrens kann auch in verschieden modifizierter Weise durchgeführt werden.

So ist es möglich und auch bevorzugt, obige Wärmebehandlung des Carbamat-Gemisches unter Bedingungen durchzuführen, bei denen Wasser und etwaige weitere Lösungsmittel abdestillieren. Das carbamathaltige Reaktionsgemisch wird etwa 30 bis 480 Minuten mit einer 60 bis 200 °C, bevorzugt 100 bis 160 °C heißen Wärmequelle auf ≥ 40 °C, bevorzugt ≥ 60 °C und besonders ≥ 80 °C erhitzt, so daß das Lösungsmittel während der thermischen Behandlung abdestilliert. Diese gleichzeitige Wärmebehandlung und Destillation kann gegebenenfalls auch unter vermindertem Druck, z. B. bei 200 bis 950 mbar, vorgenommen werden. Dabei kann so verfahren werden, daß die Druckminderung allmählich und kontinuierlich erfolgt. So kann die Destillation bei Normaldruck begonnen und bei etwa 0,5 mbar beendet

werden.

Eine weitere Modifikation besteht darin, daß vor der Trennung Polyamin/Kohlensäuresalz ein Lösungsmittel zugegeben wird. Dies kann dann angebracht sein, wenn die Viskosität des abzusaugenden Gemischs zu hoch ist, wenn die ausgefallene Kohlensäuresalze zu feinkristallin sind und wenn die Kohlensäuresalzfällung unvollständig ist. Geeignete Lösungsmittel sind z. B. Ether wie Dioxan, niedere Alkane wie Pentan, Hexan, Chlorkohlenwasserstoffe wie Dichlormethan, Trichlorethan, niedere Aromaten wie Toluol und Xylole. Nach der z. B. filtrativen Trennung von Salz und Amin wird das verwendete Lösungsmittel aus der Aminlösung abdestilliert. Vorteilhafterweise wird ein Lösungsmittel verwendet, das etwaiges restliches Wasser azeotrop zu entfernen vermag, z. B. Toluol.

Eine weitere Modifikation (B/3) besteht darin, daß vor oder während der thermischen Behandlung der Carbamatgruppen Verbindungen aufweisenden Reaktionsmischung unterschüssige Mengen an Säure, bezogen auf eingesetzte Basenäquivalente, z. B. 0,01 bis 0,99 Äquivalente Säure, bezogen auf 1 Äquivalent an zugesetzten basischen Verbindungen, mit dieser Reaktionsmischung vermischt werden. Geeignete Säuren sind z. B. Schwefelsäure, Salzsäure, Phosphorsäure und andere, unter den Reaktionsbedingungen nicht oxidierende Säuren, ferner starke organische Säuren wie z. B. Ameisensäure, Chloressigsäure oder Essigsäure oder andere Säuren, vorzugsweise mit einer Säurestärke, die mindestens der von Essigsäure entspricht.

Nach dem Abdestillieren des Lösungsmittels wird ein Gemisch aus Kohlensäuresalz und z. B. dem Sulfat, Hydrogensulfat, Chlorid, Phosphat etc. abfiltriert. Selbstverständlich können auch hier Temperaturen und Druck in den oben angegebenen Grenzen variiert werden und es kann vor der Abtrennung ein geeignetes Lösungsmittel zugegeben werden.

Bevorzugt kann vor oder zu Beginn der thermischen Behandlung Kohlendioxid eingeleitet werden. Dies empfiehlt sich besonders dann, wenn ein $OH^{\ominus}$/NCO-Verhältnis von $\geq 1$ Verwendung gefunden hat. Überschüssige Base wird dabei in ein salz der Kohlensäure umgewandelt. Sonst wird wie oben angegeben vorgegangen.

In einer weiteren Modifikation (B/4) kann, bevorzugt von der Thermobehandlung, eine Verbindung zugegeben werden, die mit Basen in einem weitgehend wasserfreien Medium schwerlösliche Salze ergibt. Diese Methode kann bei der Herstellung von Verfahrensprodukten, welche Löslichkeit für gegebenenfalls wasserhaltige Salze der Kohlensäure aufweisen und die nur geringe Löslichkeit in den Lösungsmitteln haben, von Vorteil sein. Als geeignete Verbindungen, die mit Basen Salze ergeben, sind Carbonsäureester bevorzugt, z. B. Methyl- oder Ethylester der Ameisen-, Essig-, Propion- oder Benzoesäure. Sie werden vorzugsweise in solchen Mengen eingesetzt, daß alle Hydroxidionen eine reaktionsbereite Verbindung, wie z. B. eine Estergruppen tragende Verbindung, treffen ; ein kleiner Überschuß ist bevorzugt, doch kann auch ein größerer Überschuß verwendet werden. Die Bedingungen der Wärmebehandlung und die Aufarbeitung folgen den oben angeführten Wegen. Zusätzlich zu den Salzen der Kohlensäure werden hier Carbonsäuresalze, z. B. (bei der Verwendung von Essigsäureestern) Acetate, ausgefällt und bei der Aufarbeitung wird die Alkoholkomponente mit abdestilliert.

Eine kontinuierliche Verfahrensweise ist mit allen vorgenannten Behandlungsmethoden und ihren Modifikationen durchführbar. Vorzugsweise erfolgt eine kontinuierliche Gewinnung des Polyamins durch thermische Behandlung des Carbamatgruppen aufweisende Verbindungen enthaltenden Reaktionsgemischs im Anschluß an eine kontinuierlich vorgenommene Herstellung des besagten Reaktionsgemisches.

Die kontinuierliche Verfahrensweise besteht im Prinzip darin, daß das besagte Reaktionsgemisch, das gegebenenfalls durch Zusatz von Verdünnern fließfähig gemacht wird, über eine Heizstrecke geführt wird. Temperatur der Heizstrecke unt ihre Dimensionierung bestimmen die notwendige Dauer der Wärmeeinwirkung. Die Temperatur der Heizstrecke wird so gewählt, daß eine, zumindest teilweise, bevorzugt vollständige Verdampfung der Lösungsmittel erfolgt. Dabei kann gegebenenfalls auch unter vermindertem Druck, z. B. 0,5 bis 950 mbar bevorzugt 100 bis 800 mbar, gearbeitet werden. Die Temperatur der Heizstrecke liegt zwischen 60 und 200 °C, bevorzugt zwischen 100 und 160 °C. Sie kann an verschiedenen Punkten der Heizstrecke unterschiedlich sein, jedoch sollte eine Erwärmung des zu zerlegenden Carbamatgemisches auf über 200 °C möglichst nicht erfolgen. Eine einfache Ausführungsform einer solchen Heizstrecke ist z. B. ein Dünnschichtverdampfer.

Sofern die Heizstrecke nicht Filtereinrichtungen integriert oder andere Vorkehrungen zur Abtrennung der Salzanteile enthält, wird das resultierende Amin/Salz-Gemisch nach bekannten Methoden getrennt, wie sie bei der Beschreibung der diskontinuierlichen Arbeitsweise geschildert wurden.

Verfahren C :

(Extraktion mit Lösungsmitteln)

Die Carbamatgruppen aufweisenden Verbindungen lassen sich auch durch Behandlung des Carbamatgruppen aufweisende Verbindungen enthaltenden Reaktionsgemisches mit einem geeigneten Lösungsmittel in die entsprechenden Aminogruppen aufweisenden Verbindungen (Polyamine der Erfindung) umwandeln.

Für diese Verfahrensmethodik geeignete, mit Wasser nicht mischbare organische Lösungsmittel sind

besonders solche Lösungsmittel, welche Nichtlöser für die Carbamatgruppen enthaltenden Verbindungen, sowie für die entstehenden kohlensauren Salze sind und andererseits gute Lösemittel für die entstehenden Amine darstellen. Solche Lösungsmittel sind z. B. Dichlormethan, Trichlormethan, Tetrachlormethan, Cyclohexan, Methylcyclohexan, Pentan, Hexan, Benzol und Toluol. Besonders geeignet ist Dichlormethan.

Auf 100 Teile Wasser in der Carbamatgruppen aufweisende Verbindungen enthaltenden Reaktionsmischung werden 10 bis 1 000 Teile des besagten Lösungsmittels, bevorzugt 20 bis 500, besonders bevorzugt 80 bis 150 Teile, verwendet. Die Behandlung wird bevorzugt bei 20 bis 40 °C durchgeführt, doch kann die Methode auch bei höherer Temperatur, aber höchstens bei der Temperatur, die der Siedetemperatur des verwendeten Lösungsmittels entspricht, durchgeführt werden. Die erforderliche Behandlungs- und Extraktionsdauer beträgt im allgemeinen bei Raumtemperatur etwa 1 Stunde bis 3 Tage, bevorzugt 2 Stunden bis 1 Tag, sie verkürzt sich aber bei erhöhter Behandlungstemperatur. Das Ende der Reaktion ist daran zu erkennen, daß die wäßrige und die organische Phase optisch klar sind und die organische Phase auf Säurezusatz (vorher wird zur Homogenisierung von organischer Phase und Säure z. B. Ethanol zugesetzt) nicht mehr aufschäumt. Zweckmäßig wird während der Behandlung gerührt. Nach beendeter Reaktion werden die beiden Phasen voneinander mechanisch getrennt und die organische Phase durch Destillation vom organischen Lösungsmittel befreit. Restliche Mengen flüchtiger Stoffe werden bei z. B. 0,1 mbar/100 °C entfernt.

Im Prinzip verwendbar sind jedoch auch wassermischbare Lösungsmittel, wenn sie zumindest schlechtere Lösemittel für Salze der Kohlensäure sind als Wasser. Solche Lösemittel sind etwa Methanol, Ethanol, n-Propanol, i-Propanol, n-Butanol, i-Amylalkohol, cyclische Ether wie Dioxan oder Tetrahydrofuran, wasserlösliche acyclische Ether wie Diethylenglykoldimethylether oder Ketone wie Aceton, Methylethylketon und andere. Auch hier wird nach Umwandlung der Carbamatgruppen enthaltenden Verbindung in ein Polyamin ein Zweiphasensystem erhalten. Dabei ist in der wäßrigen Phase das Kohlensäuresalz und in der organischen Phase das Amin angereichert ; wegen der gegenseitigen Mischbarkeit befinden sich jedoch in der wäßrigen Phase Anteile des organischen Lösungsmittels und des Amins, während die organische Phase anteilmäßig Salze und Wasser enthält, so daß die organische Phase nach Abdestillieren des Lösungsmittels noch einmal filtriert werden muß.

Es ist auch möglich, ein Gemisch mehrerer organischer Lösungsmittel zu verwenden. Bevorzugt werden die Lösungsmittel daher so ausgewählt, daß mindestens ein Lösungsmittel bevorzugt neben dem Amin auch die Carbamatgruppen aufweisende Verbindung löst, während das mindestens eine andere Lösungsmittel bevorzugt nur das Amin löst. Für das erste Lösungsmittel sind z. B. niedere Alkohole, für das zweite Lösungsmittel z. B. chlorierte aliphatische Kohlenwasserstoffe brauchbar.

Die Extraktion kann bei Normaldruck, bei vermindertem bzw. bei Überdruck vorgenommen werden, bevorzugt ist das Arbeiten bei Normaldruck.

Auch das Extraktionsverfahren kann dadurch modifiziert werden, daß vor oder während der Extraktion die Carbamatgruppen aufweisenden Verbindungen enthaltende Reaktionsmischung mit unterschüssigen Äquivalenten an Säuren, bezogen auf die eingesetzte Basenmenge, d. h. etwa 0,01 bis 0,99 Äquivalente Säure pro 1 Äquivalent an Basen, vermischt werden. Besonders geeignet ist diese Modifizierung immer dann, ebenso wie die Einleitung von Kohlendioxid, wenn ein $OH^{\ominus}$/NCO-Verhältnis von größer 1 : 1 Verwendung gefunden hat. Auch die üblichen Modifizierungen des Verfahrens.B) können hier sinngemäß übernommen werden.

Für dieses diskontinuierlich auszuführende Extraktionsverfahren eignen sich laborübliche Vorrichtungen, z. B. Rühren des Gemischs mit den Extraktionslösungsmitteln in einem Kolben, bis optisch klare Phasen entstehen und anschließende Überführung und Separierung der Phasen in einem Scheidetrichter. Verwendbar sind aber auch übliche Extraktoren für flüssig/flüssig-Gemische, wie sie für die Verwendung von spezifisch schwereren oder leichteren Extraktionsmitteln im Vergleich mit dem Extraktionsgut, angeboten werden. Die Extraktion kann somit auch kontinuierlich durchgeführt werden. Verwendet man z. B. ein Lösungsmittel, das die Carbamatgruppen aufweisenden Verbindungen nicht löst, und mit dem Polyamin eine spezifisch leichtere Phase bildet, so kann beispielsweise folgendermaßen vorgegangen werden :

Ein Gefäß wird kontinuierlich mit einem Carbamatgruppen enthaltenden Reaktionsgemisch beschickt. Unter Rühren wird ein wie oben definiertes Lösungsmittel von unten eingebracht, das das freie Amin löst, über einen z. B. Überlauf aus dem Extraktor entfernt, durch Destillation vom Amin befreit und wieder in den Extraktor eingebracht wird. Die spezifisch schwerere, z. B. die wäßrige Salzlösung, wird unten abgelassen und mit Natriumhydroxid versetzt und vom daraufhin Kristallisierenden Kohlensäuresalz befreit und im Kreislauf wieder zur Umsetzung mit den NCO-Verbindungen eingesetzt.

Aus den organischen Aminlösungen kann das Amin sowohl nach der kontinuierlichen als auch diskontinuierlichen Verfahrensweise leicht durch gegebenenfalls unter vermindertem Druck ausgeführte Destillation der Lösungsmittel rein erhalten werden.

Dies ist in vielen Fällen jedoch nicht nötig, da für eine ganze Reihe von Anwendungszwecken, z. B. Herstellung von Beschichtungen von textilen Geweben, Leder und anderen Flächengebilden, Amine als Lösung in einem organischen Lösungsmittel verwendet werden. In solchen Fällen wird zweckmäßigerweise ein solches Lösungsmittel verwendet, wie es auch für die anwendungstechnischen Zwecke der angeschlossenen Verwendung zum Aufbau hochmolekularer Polyurethan (harnstoff)e sinnvoll ist.

Die erfindungsgemäß erhaltenen Polyamine stellen im allgemeinen farblose bis schwach gefärbte, mittelviskose bis hochviskose und gegebenenfalls höherschmelzende Produkte dar.

Die erfindungsgemäß erhaltenen, gegebenenfalls modifizierten, Urethangruppen und Polyestergruppierungen enthaltenden aromatischen Polyamine werden wegen ihres niedrigen Dampfdrucks vorzugsweise als Reaktionspartner für gegebenenfalls blockierte Polyisocyanate bei der Herstellung von Polyurethanen (Polyurethanharnstoffen), gegebenenfalls zelligen Polyurethankunststoffen oder Polyurethanschaumstoffen eingesetzt, wobei sie gegebenenfalls auch mit anderen niedermolekularen (Molmassen 32 bis 399 und/oder höhermolekulare (Molmassen 400 bis ca. 12 000) Verbindungen mit gegenüber Isocyanaten reaktiven Gruppen kombiniert werden können. Geeignete Ausgangskomponenten für die Herstellung von Polyurethankunststoffen werden oben im Zusammenhang mit der Prepolymerherstellung bzw. auch in DE-A 2 302 564, DE-A 2 432 764 (US-PS 3 903 679) sowie in den DE-A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendende Hilfs- und Zusatzstoffe.

Die Verwendung der erfindungsgemäß hergestellten Polyamine zur Herstellung von Polyurethan(harnstoff)en ist ebenfalls Gegenstand der vorliegenden Erfindung. Die Anwendung der Polyamine kann als Reaktivkomponente oder Reaktivkomponentenmischung bei der Umsetzung mit Polyisocyanaten, z. B. für Elastomere, Beschichtungen, Fäden in der Applikation aus Schmelzen, Lösungen, Dispersionen erfolgen. Weitere Verwendungszwecke der erfindungsgemäß hergestellten Polyamine sind z. B. Kupplungskomponenten für Diazofarbstoffe, Härte für Epoxid- und Phenolharze, sowie alle anderen an sich bekannten Reaktionen von Aminen wie Amid- oder Imidbildung und andere.

Die folgenden Beispiele dienen der Erläuterung des erfindungsgemäßen Verfahrens.

## Beispiele

Als Hydroxygruppen aufweisende Polyester zur Herstellung der NCO-Gruppen aufweisenden Polyester-NCO-Prepolymere wurden folgende Polyesterpolyole verwendet:

Polyester A

Diol aus Adipinsäure, Ethylenglykol und Butandiol-1,4 (Molverhältnis Ethylenglykol : Butandiol-1,4 = 1 : 1) mit einer Säurezahl von 0,4 und einer OH-Zahl von 56.

Polyester B

Diol aus Adipinsäure, Ethylenglykol und Butandiol-1,4 (Molverhältnis Ethylenglykol : Butandiol-1,4 = 4 : 7) mit einer Säurezahl von 0,35 und einer OH-Zahl von 56.

Polyester C

Diol aus Adipinsäure, Hexandiol-1,6 und Neopentylglykol (Molverhältnis Hexandiol-1,6 : Neopentylglykol = 11 : 6) mit einer Säurezahl von 0,28 und einer OH-Zahl von 65.

Polyester D

Diol aus Adipinsäure und Butandiol-1,4 mit einer Säurezahl von 0,6 und einer OH-Zahl von 124.

Polyester E

Diol aus Adipinsäure und Hexandiol-1,6 mit einer Säurezahl von 0,5 und einer OH-Zahl von 133.

Polyester F

Diol aus Azelainsäure, Dipropylenglykol und Butandiol-1,4 (Molverhältnis Dipropylenglykol : Butandiol-1,4 = 8 : 3) mit einer Säurezahl von 0,15 und einer OH-Zahl von 35.

Polyester G (entfällt)

Polyester H (entfällt)

NCO-Prepolymere A-F

NCO-Prepolymere aus den Polyestern A-F und einem Gemisch aus 65 % 2,4-Diisocyanatotoluol und 35 % 2,6-Diisocyanatotoluol, die durch Umsetzung der Polyester A-H bei 30 °C mit einem obigen Gemisch bei einem OH : NCO-Verhältnis von 1 : 6 und nachfolgende destillative Abtrennung des NCO-Monomeren

mit einem Dünnschichtverdampfer erhalten werden.

NCO-Prepolymer A : NCO-Wert 3,8 % (theor. 3,58 %)[x)]
NCO-Prepolymer B : NCO-Wert 3,6 % (theor. 3,58 %)
NCO-Prepolymer C : NCO-Wert 4,1 % (theor. 4,06 %)
NCO-Prepolymer D : NCO-Wert 7,0 % (theor. 6,71 %)
NCO-Prepolymer E : NCO-Wert 7,1 % (theor. 7,06 %)
NCO-Prepolymer F : NCO-Wert 2,4 % (theor. 2,37 %)
NCO-Prepolymer G : (entfällt)

Alle NCO-Prepolymere stellen bei Raumtemperatur hochviskose Öle dar.

NCO-Prepolymere H-N

NCO-Prepolymere aus den Polyestern A-F und 2,4-Diisocyanatotoluol, entstanden durch Umsetzung der Polyester A-F und 2,4-Diisocyanatotoluol mit einem OH : NCO-Verhältnis von 1 : 2 bei 80 °C.

NCO-Prepolymer H : NCO-Wert 3,8 % (theor. 3,58 %)
NCO-Prepolymer I : NCO-Wert 3,7 % (theor. 3,58 %)
NCO-Prepolymer K : NCO-Wert 4,3 % (theor. 4,06 %)
NCO-Prepolymer L : NCO-Wert 6,9 % (theor. 6,71 %)
NCO-Prepolymer M : NCO-Wert 6,9 % (theor. 7,06 %)
NCO-Prepolymer N : NCO-Wert 2,6 % (theor. 2,37 %)
NCO-Prepolymer O : (entfällt)

Alle NCO-Prepolymere stellen bei Raumtemperatur hochviskose bis wachsartige Verbindungen dar.

NCO-Prepolymere P-V

NCO-Prepolymere aus den Polyestern A-F und einem Gemisch aus 40 % 2,4'-Diisocyanatodiphenylmethan und 60 % 4,4'-Diisocyanatodiphenylmethan.

Prepolymer P : NCO-Wert 3,6 % (theor. 3,36 %)
Prepolymer Q : NCO-Wert 3,6 % (theor. 3,36 %)
Prepolymer R : NCO-Wert 3,8 % (theor. 3,78 %)
Prepolymer S : NCO-Wert 6,1 % (theor. 5,99 %)
Prepolymer T : NCO-Wert 6,4 % (theor. 6,26 %)
Prepolymer U : NCO-Wert 2,2 % (theor. 2,27 %)
Prepolymer V : (entfällt)

NCO-Prepolymere W-Y

NCO-Prepolymere aus Polyesterpolyol H mit a) einem Gemisch aus 65 Gew.-% Toluylen-2,4-diisocyanat und 35 Gew.-% Toluylen-2,6-diisocyanat (NCO-Prepolymer W), b) 2,4-Diisocyanatotoluol (NCO-Prepolymer X) und c) einem Gemisch aus 40 % 2,4'-Diisocyanatodiphenylmethan und 60 Gew.-% 4,4'-Diisocyanatodiphenylmethan.

Prepolymer W : NCO-Wert 5,0 % (theor. 4,76 %)
Prepolymer X : NCO-Wert 4,9 % (theor. 4,76 %)
Prepolymer Y : NCO-Wert 4,5 % (theor. 4,38 %)

## Beispiele 1-7

### Beispiel 1

1.1. Herstellung des Carbamats

Vorgelegt werden 304 g 50 %ige KOH-Lösung (2,72 ml KOH), 1,86 l Wasser und 2 g Mersolat H®. Die Lösung wird mit einem Eisbad extern gekühlt. Innerhalb 60 Minuten werden 2 kg des auf 80 °C erwärmten Prepolymers A zugegeben. Dabei wird eine Innentemperatur von 18-23 °C aufrechterhalten und 10 Minuten bei dieser Temperatur weitergerührt. Während der Zugabe des NCO-Prepolymers und während der Nachrührzeit wird, um das Verklumpen des ausgefallenen Carbamats zu verhindern, intensiv gerührt.

[x)] (NCO-Werte jeweils in Gew.-%)

1.2. Herstellung des Amins — thermische Zersetzung

Die so erhaltene Carbamatreaktionsmischung wurde 2 Stunden zum Rückfluß erhitzt, danach wurde bei einer Badtemperatur von 80 °C ca. die Hälfte des Wassers bei 20 mbar abdestilliert. Nach Zugabe von 600 ml Toluol wird die Destillation bei 20 mbar/80 °C fortgesetzt und Wasser und Toluol abdestilliert. Das aminische Endprodukt wird mit 800 ml Dichlormethan aufgenommen und das Kohlensäuresalz abfiltriert. Das Amin wird bei 50 °C/20 mbar und dann 80 °C/2 mbar vom Dichlormethan und Spuren anderer flüchtiger Stoffe befreit. Daten in Tabelle 1.

Beispiel 2

2.1. Herstellung des Carbamats

Vorgelegt werden 205 g 45 %ige Natronlauge (2,31 mol NaOH), 2 l Wasser und 2 g Mersolat ®H. Die Lösung wird mit einem Eisbad extern gekühlt. Innerhalb 60 Minuten werden 2 kg (1,71 mol NCO) des auf 60 °C erwärmten Prepolymers B ($OH^{\ominus}$ : NCO-Verhältnis 1,35 : 1) zugegeben. Dabei wird eine Innentemperatur von 18-22 °C aufrechterhalten und 15 Minuten bei dieser Temperatur weitergerührt. Während der Zugabe des NCO-Prepolymers wird, um das Verklumpen des ausgefallenen Carbamats zu verhindern, intensiv gerührt.

2.2. Herstellung des Amins — acidolytische Zersetzung durch Ionenaustauscher

Die so erhaltene Carbamatreaktionsmischung wird mit 2 l Dioxan versetzt und innerhalb 25 Minuten in eine Mischung von 1,4 kg Sulfonsäure-Ionenaustauscher Lewatit SC 108® (Bayer AG) und 250 ml Wasser gegeben. Dabei werden 35 l $CO_2$ frei (92 % der Theorie). Nach dem zur Reaktionsvervollständig 15 Minuten auf 60 °C erwärmt wurde, wird abfiltriert und aus dem Filtrat bei 20 mbar/80 °C und 1,5 mbar/80 °C das Lösungsmittel abdestilliert. Daten in Tabelle 1.

Beispiel 3

3.1. Herstellung des Carbamats

Vorgelegt werden 234 g 45 %ige Natronlauge (2,63 mol NaOH), 100 ml Wasser und 3 l Dimethylformamid. Die Lösung wird mit einem Eisbad extern gekühlt. Innerhalb 75 Minuten werden 2 kg (1,95 mol NCO) des 60 °C warmen Prepolymers C ($OH^{\ominus}$ : NCO-Verhältnis 1,35 : 1) zugegeben. Dabei wird eine Innentemperatur von 20-25 °C aufrechterhalten. Während der Zugabe des NCO-Prepolymers und der 15-minütigen Nachrührzeit wird intensiv gerührt.

3.2. Herstellung des Amins — acidolytische Zersetzung

Obige Carbamatreaktionsmischung wird in einen Tropftrichter geeigneter Dimensionierung gegeben (Komponente A). In einen weiteren Tropftrichter werden 2,63 kg 10 %ige Schwefelsäure (5,26 val $H_2SO_4$) gegeben (Komponente B).

Innerhalb 45 Minuten werden beide Komponenten in einen 150 ml Wasser als Rührmasse enthaltenden Reaktionsraum so entleert, daß pro Zeiteinheit gleiche val-Mengen Natriumionen und Protonen aufeinandertreffen. Dabei wird auf 25-30 °C gekühlt. Nachdem 40 l $CO_2$ (93 % der Theorie) entwichen sind, wird das Reaktionsgemisch bei 80 °C/20 mbar und 80 °C/2 mbar von flüchtigen Bestandteilen befreit. Das verbliebene zähe Gemisch wird mit 1,5 l Toluol durchmischt und das ausgefallene Salz abgenutscht. Daten in Tabelle 1.

Beispiel 4

4.1. Herstellung des Carbamats

Vorgelegt werden 100 g 50 %ige Kalilauge (0,89 mol KOH), 400 ml Wasser und 0,75 g Mersolat H®. Die Lösung wird mit einem Eisbad extern gekühlt. Innerhalb 20 Minuten werden 354 g (0,59 mol NCO) des auf 40 °C erwärmten Prepolymers D zugegeben ($OH^{\ominus}$ : NCO-Verhältnis 1,5 : 1). Dabei und während der 15-minütigen Nachrührzeit wird eine Innentemperatur von 18-22 °C aufrechterhalten. Um ein Verklumpen und Absetzen des unlöslich-schmierigen Carbamats zu vermeiden, wird ständig intensiv gerührt.

4.2. Herstellung des Amins — Gewinnung durch Extraktion

Die so erhaltene Carbamatreaktionsmischung wird mit 1,5 l Dichlormethan und 500 ml Toluol versetzt und das resultierende Zweiphasensystem 6 Stunden bei 30 °C gerührt. Nach der Phasentrennung in einem Scheidetrichter geeigneter Dimensionierung wird die org. Phase destillativ (erst bei 20 mbar,

dann 1 mbar/80 °C) von flüchtigen Stoffen befreit und (zur Abtrennung geringer Spuren von Kohlensäuresalz) abgesaugt. Daten in Tabelle 1.

Beispiel 5

5.1. Herstellung des Carbamats

Vorgelegt werden 225 g 45 %ige Natronlauge (2,54 mol NaOH), 1 l Wasser und 1 g Mersolat H®. Diese Lösung wird mit einem Eisbad gekühlt. Innerhalb 40 Minuten wird 1 kg (1,69 mol) des auf 60 °C erwärmten Prepolymers E ($OH^{\ominus}$ : NCO-Äquivalentverhältnis 1,5 : 1) zugegeben. Dabei und während der 30-minütigen Nachrührzeit wird eine Innentemperatur von 24-28 °C aufrechterhalten. Um ein Verkleben und Absetzen des Carbamats zu verhindern, wird ständig intensiv gerührt.

5.2. Herstellung des Amins — Thermische Zersetzung im Lösungsmittel

Die so erhaltene Carbamatreaktionsmischung wird mit 1 l Dimethylformamid versetzt und 1 Stunde auf 80 °C erhitzt. Aus dem beim Abkühlen gebildeten Zweiphasensystem wird die untere, aminische Phase durch Destillation bei 15 mbar/80 mbar vom Lösungsmittel befreit, mit 450 ml Dichlormethan aufgenommen, abgenutscht und erneut das Lösungsmittel bei 20 mbar/80 °C und 1,5 mbar/80 °C abdestilliert. Daten in Tabelle 1.

Beispiel 6

6.1. Herstellung des Carbamats

Vorgelegt werden 61 g 45 %ige Natronlauge (0,69 mol NaOH), 1 l Wasser und 1 g Mersolat H®. Diese Lösung wird mit einem Eisbad gekühlt. Innerhalb 40 Minuten wird 1 kg (0,57 mol NCO) des auf 60 °C erwärmten Prepolymers F ($OH^{\ominus}$ : NCO-Äquivalentverhältnis 1,2 : 1) zugegeben. Dabei und während der 30-minütigen Nachrührzeit wird eine Innentemperatur von 20-25 °C aufrechterhalten und intensiv gerührt.

6.2. Herstellung des Amins

Aufarbeitung erfolgt wie in Beispiel 1.2. Daten in Tabelle 1.

Beispiel 7 (entfällt)

(Siehe Tabelle 1 Seite 22 f.)

Beispiele 8-13

Beispiel 8

8.1. Herstellung des Carbamats

Vorgelegt werden 284 g 50 %ige Kalilauge (2,53 mol KOH), 2 l Wasser und 2 g Mersolat H®. Die Lösung wird mit einem Eisbad extern gekühlt. Innerhalb 60 Minuten werden 2 kg des auf 50 °C erwärmten NCO-Prepolymers H (1,81 mol NCO) zugegeben ($OH^{\ominus}$ : NCO-Äquivalentverhältnis 1,4 : 1). Während der Zugabezeit und des 10-minütigen Nachrührens wird eine Innentemperatur von 18-23 °C aufrechterhalten und intensiv gerührt.

8.2. Herstellung des Amins

Die Herstellung des Amins wurde wie in 1.2. beschrieben durchgeführt. Daten in Tabelle 2.

Beispiel 9

9.1. Herstellung des Carbamats

Vorgelegt werden 237 g 50 %ige Kalilauge (2,11 Mol KOH), 2 l Wasser und 2 g Mersolat H®. Die Lösung wird mit einem Eisbad extern gekühlt. Innerhalb 60 Minuten werden 2 kg des auf 55 °C erwärmten NCO-Prepolymers I (1,76 mol NCO) zugegeben ($OH^{\ominus}$ : NCO-Äquivalentverhältnis 1,2 : 1), während der Zugabezeit und der 20-minütigen Nachrührzeit wird eine Innentemperatur von 18-25 °C aufrechterhalten und intensiv gerührt.

Tabelle 1

Daten der in den Beispielen 1-7 erhaltenen aminischen Produkte

| | Beispiel 1 | Beispiel 2 | Beispiel 3 | Beispiel 4 | Beispiel 5 | Beispiel 6 | Beispiel 7 |
|---|---|---|---|---|---|---|---|
| Ausbeute (%) | 96 | 93 | 94 | 94 | 98 | 98 | (entfällt) |
| prim. Stickstoff (%)[1] | 1,04 | 1,14 | 1,07 | 1,85 | 2,00 | 0,57 | |
| NH-Zahl[2] (mg KOH/g) | 41,6 | 45,6 | 42,8 | 74,0 | 80 | 22,8 | |
| NH-Zahl[3] (mg KOH/g) | 44,0 | 48,0 | 46,3 | 81,3 | 81 | 27 | |
| Gesamt-Stickstoff[4] (%) | 2,49 | 2,38 | 2,76 | 4,70 | 4,66 | 1,50 | |
| Säure-Zahl (mg KOH/g) | 0,05 | 0,05 | 0,35 | 0,18 | 0,10 | 0,1 | |
| Wasser-Gehalt[5] (%) | 0,12 | 0,07 | 0,08 | 0,15 | 0,3 | 0,05 | |

1) Titration mit $HClO_4$
2) aus 1) berechnet
3) mit Pyridin/Acetanhydrid-Bestimmung
4) nach Dumas
5) nach Karl Fischer

9.2. Herstellung des Amins

Die Herstellung des Amins erfolgt wie in 1.2. beschrieben.

Beispiel 10

10.1. Herstellung des Carbamats

Vorgelegt werden 273 g 45 %ige Natronlauge (3,07 mol NaOH), 2 l Wasser und 2 g Mersolat H®. Diese Lösung wird mit einem Eisbad extern gekühlt. Unter intensivem Rühren werden unter Einhaltung einer Innentemperatur von 20-26 °C 2 kg NCO-Prepolymer K (2,05 mol NCO) zugegeben ($OH^{\ominus}$ : NCO-Äquivalentverhältnis = 1,5 : 1). 30 Minuten wurde bei dieser Temperatur nachgerührt.

10.2. Herstellung des Amins

Die Herstellung des Amins erfolgt wie in 1.2. beschrieben. Daten in Tabelle 2.

Beispiel 11

11.1. Herstellung des Carbamats

Vorgelegt werden 460 g 50 %ige Kalilauge (4,11 mol KOH), 1,8 l Wasser und 3 g Mersolat H®. Diese wäßrige Mischung wird mit einem Eisbad extern gekühlt. Innerhalb 50 Minuten werden unter intensivem Rühren und unter Einhaltung einer Innentemperatur von 20-26 °C 2 kg NCO-Prepolymer L (40 °C) (3,29 mol NCO) zugegeben ($OH^{\ominus}$ : NCO-Äquivalentverhältnis = 1,25 : 1). 20 Minuten wird bei dieser Temperatur nachgerührt.

11.1. Herstellung des Amins

Die Herstellung des Amins erfolgt wie in 1.2. beschrieben.

Beispiel 12

12.1. Herstellung des Carbamats

Vorgelegt werden 460 g 50 %ige Kalilauge (4,11 mol KOH), 2,3 l Wasser und 2,5 g Mersolat H®. Diese wäßrige Lösung wird mit einem Eisbad extern gekühlt. Innerhalb 35 Minuten werden unter intensivem Rühren und unter Einhaltung einer Innentemperatur von 23-26 °C 2 kg NCO-Prepolymer M (3,29 mol NCO) zugegeben ($OH^{\ominus}$ : NCO-Äquivalentverhältnis = 1,25 : 1). 15 Minuten wird bei dieser Temperatur nachgerührt.

12.1. Herstellung des Amins

Die Herstellung des Amins erfolgt wie in 1.2. beschrieben. Daten in Tabelle 2.

Beispiel 13

13.1. Herstellung des Carbamats

Vorgelegt wird eine Mischung aus 222 g 50 %iger Kalilauge (1,98 mol KOH), 2,1 l Wasser und 2 g Mersolat H®, die mit einem Eisbad extern gekühlt werden kann. Innerhalb 60 Minuten werden 2 kg 70 °C warmes NCO-Prepolymer N (1,24 mol NCO) unter intensivem Rühren zugegeben ($OH^{\ominus}$ : NCO-Äquivalentverhältnis 1,6 : 1). 20 Minuten wird bei dieser Temperatur nachgerührt.

13.1. Herstellung des Amins

Die Herstellung des Amins erfolgt wie in 1.2. beschrieben. Daten in Tabelle 2.

Beispiel 14 (entfällt)

(Siehe Tabelle 2 Seite 25 f.)

Tabelle 2

Daten der in den Beispielen 8-14 erhaltenen aminischen Produkte

| | Beispiel 8 | Beispiel 9 | Beispiel 10 | Beispiel 11 | Beispiel 12 | Beispiel 13 | Beispiel 14 |
|---|---|---|---|---|---|---|---|
| Ausbeute (%) | 88 | 91 | 98 | 94 | 97 | 99 | (entfällt) |
| prim. Stickstoff[1)] (%) | 1,19 | 0,99 | 1,23 | 1,98 | 1,88 | 0,80 | |
| NH-Zahl[2)] (mg KOH/g) | 47,6 | 39,6 | 49,2 | 79,2 | 75,2 | 32 | |
| NH-Zahl[3)] (mg KOH/g) | 50,1 | 45,5 | 50,9 | 84,4 | 79,0 | 33,1 | |
| Gesamt-Stickstoff[4)] (%) | 2,50 | 2,40 | 2,76 | 4,66 | 4,49 | 1,50 | |
| Säure-Zahl (mg KOH/g) | 0,05 | 0,1 | 0,1 | 0,2 | 0,16 | 0,12 | |
| Wassergehalt[5)] (%) | 0,3 | 0,25 | 0,09 | 0,1 | 0,1 | 0,1 | |

1)-5) s. Tabelle 1

Beispiele 15-21

Beispiel 15

15.1. Herstellung des Carbamats

Die Herstellung des Carbamats erfolgt wie in 8.1. beschrieben.

15.1. Herstellung des Amins

Die Carbamatreaktionsmischung aus 15.1. wird mit 2 l Dimethylformamid vermischt und in einen Tropftrichter geeigneter Größe gegeben (Komponente A).

In einen weiteren Tropftrichter werden 923,5 ml 10 %ige Chlorwasserstoffsäure gegeben (Komponente B).

Innerhalb 50 Minuten werden beide Komponenten in einem 150 ml Wasser als Rührmasse enthaltenden Reaktionsraum so entleert, daß pro Zeiteinheit gleiche val-Mengen Natrium-Ionen und Protonen aufeinandertreffen. Dabei wird auf 25-30 °C gekühlt. Nachdem 34,3 l $CO_2$ (85 % der Theorie) entwichen sind, wird aus dem entstandenen Zweiphasensystem die wäßrige, die Hauptmenge Salz enthaltende, Phase abgetrennt und verworfen. Die organische Phase wird bei 80 °C/20 mbar eingeengt, mit 1,5 l Dioxan aufgenommen, abgesaugt und die dioxanische Lösung bei 20 mbar/80 °C und dann 80 °C/1 mbar vom Dioxan und restlichen, weiteren flüchtigen Bestandteilen befreit. Daten in Tabelle 3.

Beispiel 16

16.1. Herstellung des Carbamats

Die Herstellung des Carbamats erfolgt wie in 9.1. beschrieben.

16.2. Herstellung des Amins

In obige Carbamatreaktionsmischung werden 2,5 l Azetonitril eingerührt. Innerhalb 90 Minuten werden bei 40 bis 45 °C 2 kg saures Ionenaustauscherharz SPC 118® in Portionen zugegeben. Dabei werden 38 l $CO_2$ (96 % der Theorie) freigesetzt. Nachdem zur Reaktionsvervollständigung 25 Minuten auf 60 °C erwärmt wurde, wird abfiltriert und aus dem aminischen Filtrat bei 20 mbar/80 °C und dann 1,5 mbar/80 °C das Lösemittel abdestilliert. Daten in Tabelle 3.

Beispiel 17

17.1. Herstellung des Carbamats

Die Herstellung des Carbamats erfolgt wie in 10.1. beschrieben.

17.2. Herstellung des Amins

Es wird wie in 15.2. beschrieben vorgegangen. Anstelle von Chlorwasserstoffsäure werden jedoch 184,2 g wasserfreie Essigsäure verwendet, wobei 41,8 l $CO_2$ (91 % der Theorie) frei werden. Daten in Tabelle 3.

Beispiel 18

18.1. Herstellung des Carbamats

Die Herstellung des Carbamats erfolgt wie in 11.1. beschrieben.

18.2. Herstellung des Amins

Es wird wie in 15.2. beschrieben vorgegangen. Anstelle von Chlorwasserstoffsäure werden jedoch 2,22 kg 10 %ige o-Phosphorsäure verwendet, wobei 69 l $CO_2$ (95 % der Theorie) frei werden. Daten in Tabelle 3.

Beispiel 19

19.1. Herstellung des Carbamats

Die Herstellung des Carbamats erfolgt wie in 12.1. beschrieben.

19.2. Herstellung des Amins

Es wird wie in 15.2. beschrieben vorgegangen. Anstelle von Chlorwasserstoffsäure werden jedoch 189,1 g wasserfreie Ameisensäure verwendet, wobei 73 l $CO_2$ (100 % der Theorie) frei werden. Daten in Tabelle 3.

Beispiel 20

20.1. Herstellung des Carbamats

Die Herstellung des Carbamats erfolgt wie in 13.1. beschrieben.

20.2. Herstellung des Amins

Es wird wie in 16.1. beschrieben vorgegangen. Anstelle von SPC 118® werden jedoch 2,5 kg saurer Ionenaustauscher CNP 80 verwendet. Es werden 25 l $CO_2$ (90 % der Theorie) frei. Daten in Tabelle 3.

Beispiel 21 (entfällt)

(Siehe Tabelle 3 Seite 27 f.)

Beispiele 22-28

Beispiel 22

22.1. Herstellung des Carbamats

Vorgelegt wird eine Mischung aus 287,8 g 50 %iger Kalilauge (2,57 mol KOH), 2 l Wasser, 2 g Mersolat H® und 1 l Dioxan, die mit einem Eisbad gekühlt werden kann. Innerhalb 75 Minuten werden unter intensivem Rühren 2 kg des auf 65 °C erwärmten NCO-Prepolymers P (1,71 mol NCO) zugegeben ($OH^{\ominus}$ : NCO-Äquivalentverhältnis 1,5 : 1). 45 Minuten wird bei dieser Temperatur weitergerührt.

22.2. Herstellung des Amins

Die obige Mischung wird mit 2,5 l Toluol versetzt und das resultierende Gemisch 1 Stunde auf 100 °C erhitzt. Daraufhin wird bei 80 °C/20 mbar das Lösungsmittel abgezogen, nochmals mit 500 ml Toluol aufgenommen, erneut bei 80 °C/20 mbar und dann 80 °C/2 mbar das Lösungsmittel abdestilliert und das 80 °C warme aminische Produkte durch Filtration vom Kohlensäuresalz befreit. Daten in Tabelle 4.

Beispiel 23

23.1. Herstellung des Carbamats

Vorgelegt wird eine Mischung aus 268 g 50 %iger Kalilauge (2,4 mol KOH), 2 l Wasser und 1 l Dimethoxyethan, die mit einem Eisbad gekühlt werden kann. Innerhalb 75 Minuten werden unter intensivem Rühren 2 kg des auf 60 °C erwärmten NCO-Prepolymers Q (1,71 mol NCO) zugegeben ($OH^{\ominus}$ : NCO-Äquivalentverhältnis 1,4 : 1). 60 Minuten wird bei dieser Temperatur weitergerührt.

23.9. Herstellung des Amins

Die Herstellung des Amins erfolgt wie in 22.2. beschrieben. Daten in Tabelle 4.

Beispiel 24

24.1. Herstellung des Carbamats

Vorgelegt wird eine Mischung aus 243 g 50 %iger Kalilauge (2,17 mol KOH), 2 l Wasser und 1,5 l Acetonitril, die mit einem Eisbad extern gekühlt werden kann. Innerhalb 75 Minuten werden unter intensivem Rühren 2 kg des auf 60 °C erwärmten NCO-Prepolymers R (1,81 mol NCO) zugegeben, wobei eine Innentemperatur von 20-25 °C aufrechterhalten wird ($OH^{\ominus}$ : NCO-Äquivalentverhältnis = 1,2 : 1). 45 Minuten wird bei dieser Temperatur nachgerührt.

24.2. Herstellung des Amins

Die Herstellung des Amins erfolgt wie in 22.2. beschrieben. Daten in Tabelle 4.

Tabelle 3

Daten der in Beispielen 15-21 erhaltenen aminischen Produkte

| | Beispiel 15 | Beispiel 16 | Beispiel 17 | Beispiel 18 | Beispiel 19 | Beispiel 20 | Beispiel 21 |
|---|---|---|---|---|---|---|---|
| Ausbeute (%) | 94 | 92 | 93 | 98 | 90 | 98 | (entfällt) |
| prim. Stickstoff (%)[1)] | 1,14 | 1,00 | 1,29 | 2,11 | 1,99 | 0,69 | |
| NH-Zahl[2)] (mg KOH/g) | 45,6 | 40 | 51,6 | 84,4 | 79,6 | 27,6 | |
| NH-Zahl[3)] (mg KOH/g) | 47,0 | 40,9 | 57,1 | 89,7 | 90,0 | 32,0 | |
| Gesamt-Stickstoff[4)] (%) | 2,50 | 2,50 | 2,75 | 4,67 | 4,60 | 1,79 | |
| Säure-Zahl (mg KOH/g) | 0,38 | 0,09 | 0,6 | 0,65 | 0,7 | 0,09 | |
| Wassergehalt[5)] (%) | 0,05 | 0,05 | 0,35 | 0,4 | 0,19 | 0,23 | |

1)-5) s. Tabelle 1

Beispiel 25

25.1. Herstellung des Carbamats

Vorgelegt wird eine Mischung aus 423 g 45 %iger Natronlauge (3,78 mol NaOH), 1,5 l Wasser und 3 l Tetrahydrofuran, die mit einem Eisbad gekühlt werden kann. Innerhalb 90 Minuten werden unter intensivem Rühren und Einhaltung einer Innentemperatur von 18-27 °C 2 kg des auf 65 °C erwärmten NCO-Prepolymers S (2,9 mol NCO) zugegeben ($OH^{\ominus}$ : NCO-Verhältnis von 1,3 : 1). 45 Minuten wird bei dieser Temperatur nachgerührt.

25.2. Herstellung des Amins

Obige Reaktionsmischung aus 25.1. wird in einen geeigneten Tropftrichter gegeben (Komponente A). In einen weiteren Tropftrichter werden 378 g 50 %ige Schwefelsäure gegeben (Komponente B). Innerhalb 50 Minuten werden beide Komponenten in einen 1 l Tetrahydrofuran enthaltenden Reaktionsraum so eindosiert, daß pro Zeiteinheit gleiche val-Mengen Natriumionen und Protonen aufeinandertreffen. Dabei entweichen 61 l $CO_2$ (94 % der Theorie). Die Temperatur des Reaktionsinnenraumes wird durch externe Kühlung auf 20-35 °C gehalten. Nach Beendigung der $CO_2$-Entwicklung wird 10 Minuten bei 25 °C nachgerührt, mit 15 ml basischem Ionenaustauscher Lewatit M 500® versetzt, abfiltriert und bei 80 °C/20 mbar und dann 80 °C/1 mbar das Lösungsmittel abdestilliert. Das 80 °C warme Produktgemisch wird durch Filtration vom Salz befreit. Daten in Tabelle 4.

Beispiel 26

26.1. Herstellung des Carbamats

Vorgelegt wird eine Mischung aus 393 g 45 %iger Natronlauge (4,42 mol NOOH), 2 l Wasser, 1 g Mersolat H® und 1 l Dimethylformamid, die mit einem Eisbad extern gekühlt werden kann. Innerhalb 80 Minuten werden unter intensivem Rühren und Einhaltung einer Innentemperatur von 20-25 °C 2 kg des auf 40 °C erwärmten NCO-Prepolymers T (3,05 mol NCO) zugegeben ($OH^{\ominus}$ : NCO-Äquivalentverhältnis 1,45 : 1). Bei dieser Temperatur wird 30 Minuten nachgerührt.

26.2. Herstellung des Amins

Die Herstellung des Amins erfolgt wie in 25.2. beschrieben. Daten in Tabelle 4.

Beispiel 27

27.1. Herstellung des Carbamats

Vorgelegt wird eine Mischung aus 152 g 50 %iger Kalilauge (1,36 mol KOH), 2 l Wasser, 1 g Mersolat H® und 1 l Dimethylformamid, die mit einem Eisbad extern gekühlt werden kann. Innerhalb 60 Minuten werden unter intensivem Rühren und Einhaltung einer Innentemperatur von 28-33 °C 2 kg des auf 70 °C erwärmten NCO-Prepolymers U (1,05 mol NCO) zugegeben ($OH^{\ominus}$ : NCO-Äquivalentverhältnis 1,3 : 1). Bei dieser Temperatur wird 35 Minuten nachgerührt.

27.2. Herstellung des Amins

Die Herstellung des Amins erfolgt wie in 25.2. beschrieben. Daten in Tabelle 4.

Beispiel 28 (entfällt)

(Siehe Tabelle 4 Seite 30 f.)

Beispiele 29-31

Beispiel 29

29.1. Herstellung des Carbamats

Vorgelegt werden 582 g 45 %ige Natronlauge (6,55 mol NaOH), 5 l Wasser, 4,5 g Mersolat H® und 5 l Dimethylformamid. Die Lösung wird mit einem Eisbad extern gekühlt. Innerhalb 60 Minuten werden 5 kg des auf 75 °C erwärmten NCO-Prepolymers W (5,95 mol NCO) zugegeben ($OH^{\ominus}$ : NCO-Äquivalentverhältnis 1,1 : 1). Dabei wird eine Innentemperatur von 20-25 °C aufrechterhalten. Während der Zugabe des NCO-Prepolymers wird intensiv gerührt. Die Nachrührzeit beträgt 45 min.

Tabelle 4

Daten der in Beispielen 22-28 erhaltenen aminischen Produkte

| | Beispiel 22 | Beispiel 23 | Beispiel 24 | Beispiel 25 | Beispiel 26 | Beispiel 27 | Beispiel 28 |
|---|---|---|---|---|---|---|---|
| Ausbeute (%) | 94 | 93 | 96 | 97 | 91 | 90 | (entfällt) |
| prim. Stickstoff (%)[1)] | 1,06 | 1,00 | 0,94 | 1,86 | 2,00 | 0,55 | |
| NH-Zahl[2)] (mg KOH/g) | 42,4 | 40 | 37,6 | 74,4 | 80 | 22 | |
| NH-Zahl[3)] (mg KOH/g) | 46,3 | 48,1 | 43,6 | 80,2 | 83,1 | 24,3 | |
| Gesamt-Stickstoff[4)] (%) | 2,35 | 2,47 | 2,48 | 4,10 | 4,11 | 1,40 | |
| Säure-Zahl (mg KOH/g) | 0,1 | 0,12 | 0,09 | 0,28 | 0,34 | 0,50 | |
| Wassergehalt[5)] (%) | 0,06 | 0,14 | 0,28 | 0,31 | 0,11 | 0,08 | |

1)-5) s. Tabelle 1

29.2. Herstellung des Amins

2 kg der obigen Reaktionsmischung werden auf 35-40 °C aufgewärmt und innerhalb 30 Minuten mit 0,5 kg feuchtem Ionenaustauscherharz Lewatit SC 108® versetzt. Dabei entweichen 16 l $CO_2$ (94 % der Theorie). Nachdem zur Reaktionsvervollständigung 15 Minuten auf 60 °C erwärmt wurde, wird abfiltriert und aus dem aminischen Filtrat bei 20 mbar/80 °C und 1 mbar/80 °C durch Destillation das Lösungsmittel entfernt. Daten in Tabelle 5.

Beispiel 30

2 kg der nach 29.1. erhaltenen Carbamatreaktionsmischung werden während 45 Minuten auf 80-90 °C erhitzt und dann bei 80 °C/20 mbar von Lösungsmittel befreit. Das auf 50 °C abgekühlte Produkt wird mit 1 l Toluol versetzt, bei 80 °C/20 mbar 500 ml Toluol abdestilliert und der Rückstand filtriert. Das Filtrat wird bei 80 °C/20 mbar und 80 °C/1 mbar vom Lösemittel befreit. Daten in Tabelle 5.

Beispiel 31

2 kg der nach 29.1. erhaltenen Carbamatreaktionsmischung werden in einen Tropftrichter geeigneter Dimensionierung gegeben (Komponente A). In einem weiteren Tropftrichter befinden sich 82,8 g 50 %ige Schwefelsäure (0,845 val Schwefelsäure) (Komponente B).

Die jeweils Raumtemperatur aufweisenden Komponenten A und B werden unter Freisetzung von 17 l $CO_2$ (100 % der Theorie) so in einen 100 ml Wasser als Rührmasse enthaltenden Reaktionsraum eindosiert, daß pro Zeiteinheit gleiche val-Mengen an Na-Ionen und Protonen zusammentreffen. Im Reaktionsgefäß wird eine Innentemperatur von 30-35 °C eingehalten. Aus dem sich bildenden Zweiphasensystem wird die wäßrige Phase abgetrennt. Die org. Phase wird bei 80 °C/20 mbar vom Lösungsmittel befreit, abfiltriert, erneut mit 500 ml Toluol vermischt, erneut filtriert und dann bei 80 °C/20 mbar und 80 °C/2 mbar destilliert. Daten in Tabelle 5.

Beispiel 32

32.1. Herstellung des Carbamats

Vorgelegt werden 290 g 45 %ige Natronlauge (3,26 mol NaOH), 0,5 l Wasser, 2 g Mersolat H® und 2 l Dioxan. Diese Mischung wird mit einem Eisbad extern gekühlt. Innerhalb 60 Minuten werden 2 kg des auf 65 °C erwärmten NCO-Prepolymers X (2,33 mol NCO) zugegeben ($OH^{\ominus}$ : NCO-Äquivalentverhältnis 1,4 : 1). Dabei wird eine Innentemperatur von 23-28 °C aufrechterhalten. 30 Minuten wird nachgerührt.

32.2. Herstellung des Amins

Die obige Mischung wird 45 Minuten auf 100 °C erhitzt. Nach dem Abkühlen wird die wäßrige Phase abgetrennt. Die org. Phase wird durch Destillation bei 20 mbar/80 °C vom Solvens befreit und der Rückstand mit 1 l Toluol aufgenommen. Nach der Filtration wird Toluol und anderes flüchtiges Material bei 80 °C/20 mbar und 80 °C/2 mbar abdestilliert. Daten in Tabelle 5.

Beispiel 33

33.1. Herstellung des Carbamats

Vorgelegt werden 146,5 g 45 %ige Natronlauge (1,64 mol NaOH), 2 l Wasser, 2 g Mersolat H® und 2 l Dioxan.

Diese Mischung wird mit einem Eisbad extern gekühlt. Innerhalb 60 Minuten werden 2 kg des auf 75 °C erwärmten NCO-Prepolymers Y (2,14 mol NaOH) unter intensivem Rühren zugegeben ($OH^{\ominus}$ : NCO-Äquivalentverhältnis 1 : 1,3). Dabei wird eine Innentemperatur von 20-25 °C aufrechterhalten. 30 Minuten wird nachgerührt.

33.2. Herstellung des Amins

Obiges Reaktionsgemisch wird 2 Stunden auf 80 °C erhitzt und dann mit 1 l Toluol versetzt. Die gebildete wäßrige Phase wird abgetrennt. Die org. Phase wird bei 20 mbar/80 °C destillativ vom Lösungsmittel befreit und der auf Raumtemperatur abgekühlte Rückstand mit 2 kg Dichlormethan aufgenommen. Das restliche Salz wird abfiltriert und das Dichlormethan bei 20 mbar/50 °C und dann 80 °C/1 mbar wieder abdestilliert. Daten in Tabelle 5.

(Siehe Tabelle 5 Seite 32 f.)

Tabelle 5

Daten der in Beispielen 29-32 erhaltenen aminischen Produkte

| | Beispiel 29 | Beispiel 30 | Beispiel 31 | Beispiel 32 | Beispiel 33 |
|---|---|---|---|---|---|
| Ausbeute (%) | 99 | 90 | 85 | 85 | 94 |
| prim. Stickstoff[1] (%) | 1,50 | 1,37 | 1,53 | 1,23 | 1,32 |
| NH-Zahl[2] (mg KOH/g) | 60 | 54,8 | 61,2 | 49,2 | 52,8 |
| NH-Zahl[3] (mg KOH/g) | 63,9 | 64,4 | 62,4 | 52,7 | 60,0 |
| Gesamt-Stickstoff[4] (%) | 3,30 | 3,37 | 3,20 | 3,19 | 2,91 |
| Säure-Zahl (mg KOH/g) | 0,18 | 0,09 | 0,51 | 0,17 | 0,05 |
| Wassergehalt[5] (%) | 0,31 | 0,21 | 0,18 | 0,4 | 0,31 |

1)-5) s. Tabelle 1

Beispiel 34-38

Beispiel 34

34.1. Herstellung des Carbamats

Vorgelegt wird eine Mischung aus 550 g 50 %iger Kalilauge (4,91 mol), 28,6 g Butandiol-1,4 (0,32 mol), 4,75 l Wasser und 3 g Mersolat H®. Diese Mischung wird mit einem Eisbad extern gekühlt. Unter intensivem Rühren und unter Aufrechterhaltung einer Innentemperatur von 18-22 °C werden 5,43 kg (4,91 mol NCO) des auf 60 °C erwärmten NCO-Prepolymers A (Äquivalentverhältnis $OH^{\ominus}$ : Butandiol-OH : NCO = 1 : 0,13 : 1) zugegeben. 45 Minuten wird nachgerührt.

34.2. Herstellung des Amins

Die Herstellung des Amins erfolgt wie in 1.2 beschrieben. Daten in Tabelle 6.

Beispiel 35

35.1. Herstellung des Carbamats

Vorgelegt wird eine Mischung aus 454 g 50 %iger Kalilauge (4,05 mol), 4 l Wasser, 5 g Mersolat H® und 48 g Trimethyl-1,6-hexandiol, die mit einem Eisbad extern gekühlt werden kann. Unter intensivem Rühren werden unter Aufrechterhaltung einer Innentemperatur von 20-27 °C 4,48 kg des auf 60 °C erwärmten NCO-Prepolymers H (4,05 mol NCO) zugegeben (Äquivalentverhältnis NCO : Butandiol-OH : $OH^{\ominus}$ = 1 : 0,15 : 1). 30 Minuten wird nachgerührt.

35.2. Herstellung des Amins

Die Herstellung des Amins efolgt wie in 1.2. beschrieben. Daten in Tabelle 6.

Beispiel 36

36.1. Herstellung des Carbamats

Vorgelegt wird eine Mischung aus 612 g 50 %iger Kalilauge (5,46 mol KOH), 4 l Wasser, 5 g Mersolat H® und 300 g eines Polypropylenglykols der durchschnittlichen Molmasse 1 000, die mit einem Eisbad extern gekühlt werden kann. Unter intensivem Rühren und unter Einhaltung einer Innentemperatur von 18-23 °C werden innerhalb 60 Minuten 3,23 kg (5,46 mol NCO) des auf 55 °C erwärmten NCO-Prepolymers E zugegeben (Äquivalentverhältnis NCO : Polypropylenglykol-OH : $OH^{\ominus}$ = 1 : 0,11 : 1). 45 Minuten wird nachgerührt.

36.2. Herstellung des Amins

Die Herstellung des Amins erfolgt wie in 1.2. beschrieben. Daten in Tabelle 6.

Beispiel 37

37.1. Herstellung des Carbamats

Vorgelegt wird eine Mischung aus 310 g 50 %iger Kalilauge (3,4 mol), 4 l Wasser, 3 g Mersolat H® und 112 g Triethanolamin (« TEA » ; 0,75 mol), die mit einem Eisbad extern gekühlt werden kann. Unter intensivem Rühren und Aufrechterhaltung einer Innentemperatur von 25-30 °C werden 3,78 kg (3,4 mol NCO) des auf 60 °C erwärmten NCO-Prepolymers A zugegeben (Äquivalentverhältnis NCO : TEA-OH : $OH^{\ominus}$ = 1 : 0,66 : 1). 40 Minuten wird bei dieser Temperatur nachgerührt.

37.2. Herstellung des Amins

Die Herstellung des Amins erfolgt wie in 1.2. beschrieben. Daten in Tabelle 6.

Beispiel 38

38.1. Herstellung des Carbamatgruppen enthaltende Verbindungen enthaltenden Reaktionsgemisches in kontinuierlicher Verfahrensweise

Komponente I : 60 kg Prepolymer A (70 °C)
Komponente II : Gemisch aus 50 kg Wasser, 50 g Mersolat H® und 8,58 kg 50 %iger Kalilauge (23 °C).

In einem mit 3 000 Upm betriebenen 180 ml Stachelmischer werden bei einem Durchsatz von 4 kg Gemisch/min die Komponenten I und II miteinander vermischt. Der aus dem Stachelrührer austretende Produktstrom weist eine Temperatur von 44 °C auf. Die Dosierung des Prepolymers A erfolgt mit einer Zahnradpumpe in die zentrale Bohrung des Stachelrührers, die um 180 °C versetzte Dosierung der KOH-Lösung mit einer Lewa®-Pumpe HL 2 durch zwei, je 3 mm Durchmesser aufweisende Bohrungen. Der Stachelrührer wird nicht temperiert.

38.2. Herstellung des Amins

Die Herstellung des Amins erfolgt wie in 1.2 beschrieben. Daten in Tabelle 6.

Tabelle 6

Daten der in den Beispielen 34-38 erhaltenen aminischen Produkte

| | Beispiel 34 | Beispiel 35 | Beispiel 36 | Beispiel 37 | Beispiel 38 |
|---|---|---|---|---|---|
| Ausbeute (%) | 94 | 94 | 91 | 97 | 96 |
| prim. Stickstoff[1)] (%) | 0,89 | 0,88 | 1,92 | 0,84 | 1,12 |
| NH-Zahl[2)] (mg KOH/g) | 35,6 | 35,2 | 76,8 | 33,6 | 44,8 |
| NH-Zahl[3)] (mg KOH/g) | 40,0 | 36,9 | 80,2 | 37,5 | 46,1 |
| Gesamt-Stickstoff[4)] (%) | 2,41 | 2,38 | 4,38 | 2,59 | 2,51 |
| Säure-Zahl (mg KOH/g) | 0,05 | 0,05 | 0,08 | 0,12 | 0,05 |
| Wassergehalt[5)] (%) | 0,17 | 0,10 | 0,10 | 0,14 | 0,08 |

[1)-5)] s. Tabelle 1

Beispiel 39

Aus 100 g eines Aminopolyesters der NH-Zahl 55,6, wie er analog Beispiel 8 aus dem NCO-Prepolymer H hergestellt wurde, 8 g Butandiol-1,4 (Misch-OH + NH-Zahl : 143,7), 261 g Dimethylformamid und 174 g Toluol wird durch Rühren bei Raumtemperatur eine optisch klare, niederviskose Lösung hergestellt. Zu dieser Lösung werden in 30 Minuten 37 g (148 mmol) 4,4'-Diisocyanatodiphenylmethan zugegeben und das Reaktionsgemisch 4 Stunden bei Raumtemperatur gerührt. Danach ist kein NCO-Wert (IR-Spektroskopie) mehr feststellbar.

Die Lösung wird in Form eines ca. 1 mm dicken Films auf eine Glasplatte ausgegossen, 1 Stunde bei Raumtemperatur gelagert und 2 Stunden bei 120 °C ausgeheizt.

Es entsteht ein klebfreier, hochelastischer Film mit ausgezeichneter Reiß- und Knickfestigkeit.

Beispiel 40 (entfällt)

**Patentansprüche**

1. Verfahren zur Herstellung von primäre aromatische Aminogruppen, Urethangruppen, Polyestergruppierungen sowie gegebenenfalls weitere, der Isocyanatchemie entstammende Gruppen aufweisenden Polyaminen durch basische Hydrolyse von aromatisch gebundene NCO-Gruppen aufweisenden Verbindungen, dadurch gekennzeichnet, daß man

I. aromatische NCO-Gruppen, Urethangruppen und Polyestergruppierungen sowie gegebenenfalls weitere, der Isocyanatchemie entstammende Gruppen aufweisende NCO-Verbindungen mit einem Gehalt an 0,5 bis 11,5 Gew.-% NCO, gegebenenfalls gelöst in einem NCO-inerten Lösungsmittel, durch Vermischen mit

a) Alkalihydroxiden, Erdalkalihydroxiden, Alkalisilikaten, Alkalisulfiden, Alkalicyaniden und/oder Tetraalkylammoniumhydroxiden, bei Einsatz von $OH^{\ominus}$/NCO-Verhältnissen zwischen 0,3 : 1 und 2 : 1,

b) einer ausreichenden Menge an Wasser von mindestens 1 Mol Wasser pro Mol NCO-Gruppe, und gegebenenfalls Lösungsmitteln,

c) gegebenenfalls in Gegenwart von niedermolekularen, mindestens eine Hydroxyl- und/oder Aminogruppe und/oder andere H-aktive Gruppen aufweisenden Verbindungen des Molmassenbereichs 18 bis 399,

bei Aufrechterhaltung einer Temperatur in der Reaktionsmischung unter 100 °C in eine aromatisch gebundene Carbamatgruppen, Urethangruppen, Polyestergruppierungen und gegebenenfalls weitere, der Isocyanatchemie entstammende Gruppen aufweisende Reaktionsmischung überführt und

II. zur Gewinnung des aromatischen Polyamins aus der Carbamatgruppen-haltigen Reaktionsmischung diese entweder

d) mit einem Protonendonator aus der Gruppe einer in einem unlöslichen, polymeren Skelett fixierten Säure oder einer flüssigen oder wasserlöslichen Mineral- oder organischen Säure zur Neutralisation der Base behandelt und das Polyamin gegebenenfalls abtrennt und/oder

e) thermisch bei Temperaturen bis 200 °C behandelt und das Polyamin gegebenenfalls abtrennt und/oder

f) mit 10 bis 1 000 Teilen eines Lösungsmittels pro 100 Teile Reaktionsmischung behandelt, gegebenenfalls thermisch behandelt und das Polyamin gegebenenfalls abtrennt.

2. Verfahren nach Anspruch 1, dadurch gekennzeichnet, daß man als NCO-Verbindungen 2 bis 8 aromatische NCO-Gruppen aufweisende NCO-Voraddukte von aromatischen Polyisocyanaten an höhermolekulare, 2 bis 8 Hydroxylgruppen aufweisende Polyester aus Polycarbonsäuren und Polyolen des Molmassenbereiches 500 bis 5 000, gegebenenfalls in Kombination mit bis zu 50 Gew.-% an höhermolekularen, 2 bis 8 Hydroxylgruppen aufweisenden Polyhydroxylverbindungen aus der Reihe Polyether, Polyacetale, Polythioether, Polysiloxane oder Polybutadiene mit Molmassen von 500 bis 5 000, und/oder gegebenenfalls 2 bis 4 funktionellen Kettenverlängerungsmitteln des Molmassenbereichs 18 bis 399, wobei das Äquivalentverhältnis der aktive Wasserstoffatome tragenden Gruppen zu NCO-Gruppen 1,5 bis 2,8 und der NCO-Gehalt der NCO-Verbindungen zwischen 1,7 und 7,2 Gew.-% beträgt, zur basischen Hydrolyse einsetzt und bei der Hydrolyse Temperaturen unter 40 °C einhält.

3. Verfahren nach Ansprüchen 1 und 2, dadurch gekennzeichnet, daß man als NCO-Verbindungen 2 bis 3 aromatische NCO-Gruppen aufweisende NCO-Voraddukte von Hydroxypolyestern mit 2 bis 3 Hydroxylgruppen und einem Molmassenbereich von 1 000 bis 4 000 und aromatischen Diisocyanaten, gegebenenfalls in Gegenwart von weiteren höhermolekularen Polyhydroxylverbindungen und/oder 2 bis 4 funktionellen Kettenverlängerungsmitteln mit H-aktiven Gruppen mit einem NCO-Gehalt von 1,7 bis 7,2 Gew.-%, zur basischen Hydrolyse einsetzt.

4. Verfahren nach Ansprüchen 1 bis 3, dadurch gekennzeichnet, daß man als Basen Alkalihydroxide, Erdalkalihydroxide, und/oder Tetraalkylammoniumhydroxide in Mengen von 0,6 : 1 bis 1,8 : 1 Äquivalenten Base pro NCO-Gruppe, gegebenenfalls in Anwesenheit von Lösungsmitteln und/oder überschüssigem Wasser und/oder niedermolekularen Verbindungen mit H-aktiven Gruppen einsetzt.

5. Verfahren nach Ansprüchen 1 bis 4, dadurch gekennzeichnet, daß man die NCO-Verbindung mit den Basen, dem Wasser und gegebenenfalls Lösungsmitteln in Gegenwart von H-aktive Gruppen aufweisenden niedermolekularen Verbindungen des Molmassenbereichs 62 bis 250 mit 2 bis 4 H-aktiven Gruppen aus der Reihe der Hydroxyl- und/oder Aminogruppen in die Carbamatgruppen-haltige Reaktionsmischung überführt.

6. Verfahren nach Ansprüchen 1 bis 6, dadurch gekennzeichnet, daß man die Carbamatgruppen aufweisende Verbindungen enthaltende Reaktionsmischung mit $\geq$ 1 Äquivalent eines Protonendonators, bezogen auf die Menge an Base in Stufe I, behandelt und diesen Protonendonator aus der Gruppe der Mineralsäuren, organischen Säuren und in einem unlöslichen polymeren Skelett fixierten Säuren auswählt und gegebenenfalls überschüssige Säure wieder neutralisiert.

7. Verfahren nach Ansprüchen 1 bis 5, dadurch gekennzeichnet, daß man die Carbamatgruppen aufweisende Verbindungen enthaltende Reaktionsmischung zur Zerlegung des Carbamats bei Temperaturen von 60-100 °C, gegebenenfalls in Gegenwart von Lösungsmitteln und unter Anlegung eines Vakuums behandelt.

8. Verfahren nach Ansprüchen 1 bis 6, dadurch gekennzeichnet, daß man die Carbamatgruppen aufweisende Verbindungen enthaltende Reaktionsmischung mit einem mit Wasser nicht mischbaren organischen Lösungsmittel extrahiert.

9. Verwendung der nach Verfahren 1-8 erhaltenen aromatische primäre Aminogruppen, Urethangruppen, Polyestergruppierungen und gegebenenfalls weitere, der Isocyanatchemie entstammende Gruppierungen aufweisenden Verbindung als Reaktionskomponente zur Herstellung von gegebenenfalls zellförmigen Polyurethan-Kunststoffen und Polyurethan-Schaumstoffen.

**Claims**

1. Process for the preparation of polyamines containing primary aromatic amino groups, urethane groups, polyester groupings and optionally other groups derived from isocyanate chemistry by basic hydrolysis of compounds containing aromatically bound NCO groups, characterised in that

I. NCO compounds having a content of 0.5 to 11.5 % by weight of NCO and containing aromatic NCO groups, urethane groups and polyester groupings and optionally other groups derived from isocyanate chemistry, optionally dissolved in an NCO-inert solvent, are converted into a reaction mixture containing aromatically bound carbamate groups, urethane groups, polyester groupings and optionally other groups derived from isocyanate chemistry by mixing them with

a) alkali metal hydroxides, alkaline earth metal hydroxides, alkali metal silicates, alkali metal sulphides, alkali metal cyanides and/or tetraalkylammonium hydroxides, using $OH^{\ominus}/NCO$ ratios of between 0.3 : 1 and 2 : 1,

b) a sufficient quantity of water of at least one mol of water per mol of NCO group, and optionally solvents,

c) optionally in the presence of low molecular weight compounds of a molecular weight range of 18 to 399 having at least one hydroxyl group and/or amino group and/or other H-active groups, maintaining a temperature in the reaction mixture of below 100 °C, and

II. to recover the aromatic polyamine from the reaction mixture containing carbamate groups, the latter is either

d) treated with a proton donor from the group comprising an acid fixed in an insoluble polymer skeleton or a liquid or water-soluble mineral or organic acid, to neutralise the base, and the polyamine is optionally separated, and/or

e) heat treated at temperatures up to 200 °C and the polyamine is optionally separated, and/or

f) treated with 10 to 1 000 parts of a solvent per 100 parts of the reaction mixture, optionally heat treated, and the polyamine is optionally separated.

2. Process according to claim 1, characterised in that the NCO compounds used for the basic hydrolysis are NCO preadducts, containing 2 to 8 aromatic NCO groups, of aromatic polyisocyanates on relatively high molecular weight polyesters obtained from polycarboxylic acids and polyols of a molecular weight range of 500 to 5 000 and having 2 to 8 hydroxyl groups, optionally in combination with up to 50 % by weight of relatively high molecular weight polyhydroxyl compounds containing 2 to 8 hydroxyl groups, from the series comprising polyethers, polyacetals, polythioethers, polysiloxanes or polybutadienes with molecular weights of 500 to 5 000, and/or optionally 2 to 4 functional chain lengthening agents of a molecular weight range of 18 to 399, the equivalent ratio of the groups carrying active hydrogen atoms to NCO groups being 1.5 to 2.8, and the NCO content of the NCO compounds being between 1.7 and 7.2 % by weight, and temperatures below 40 °C are maintained during hydrolysis.

3. Process according to claims 1 and 2, characterised in that the NCO compounds used for the basic hydrolysis are NCO preadducts, having 2 to 3 aromatic NCO groups, of hydroxypolyesters having 2 to 3 hydroxyl groups and a molecular weight range of 1 000 to 4 000 and aromatic diisocyanates, optionally in the presence of other relatively high molecular weight polyhydroxyl compounds and/or 2 to 4 functional chain lengthening agents containing H-active groups, having an NCO content of 1.7 to 7.2 % by weight.

4. Process according to claims 1 to 3, characterised in that the bases used are alkali metal

hydroxides, alkaline earth metal hydroxides and/or tetraalkylammonium hydroxides in quantities of 0.6 : 1 to 1.8 : 1 equivalents of base per NCO group, optionally in the presence of solvents and/or excess water and/or low molecular weight compounds containing H-active groups.

5. Process according to claims 1 to 4, characterised in that the NCO compound is converted into the carbamate-group-containing reaction mixture with the bases, the water and optionally solvents in the presence of H-active-group-containing low molecular weight compounds of a molecular weight range of 62 to 250 containing 2 to 4 H-active groups from the series of hydroxyl and/or amino groups.

6. Process according to claims 1 to 6, characterised in that the reaction mixture containing compounds containing carbamate groups is treated with ⩾ 1 equivalent of a proton donor, based on the quantity of base in stage I, and this proton donor is selected from the group comprising mineral acids, organic acids and acids fixed in an insoluble polymer skeleton, and excess acid is optionally neutralised again.

7. Process according to claims 1 to 5, characterised in that the reaction mixture containing compounds containing carbamate groups is treated at temperatures of 60-100 °C, optionally in the presence of solvents and with application of a vacuum, for the purpose of decomposing the carbamate.

8. Process according to claims 1 to 6, characterised in that the reaction mixture containing compounds containing carbamate groups is extracted with an organic solvent which is immiscible with water.

9. Use of the compound obtained by processes 1-8 and containing aromatic primary amino groups, urethane groups, polyester groupings and optionally other groupings derived from isocyanate chemistry as a reactant for the production of optionally cellular polyurethane plastics and polyurethane foams.

**Revendications**

1. Procédé pour la production de polyamines présentant des groupes amino-primaires aromatiques, des groupes uréthane, des groupements polyester ainsi que, éventuellement d'autres groupes provenant de la chimie des isocyanates par hydrolyse alcaline de composés présentant des groupes NCO à liaisons aromatiques, caractérisé en ce que :

I. l'on transforme des composés NCO présentant des groupes NCO aromatiques, des groupes uréthane et de groupements polyester ainsi que, éventuellement, d'autres groupes provenant de la chimie des isocyanates, avec une teneur de 0,5 à 11,5 % en poids de NCO, éventuellement dissous dans un solvant inerte pour les NCO, par mélange avec

a) des hydroxydes alcalins, des hydroxydes alcalino-terreux, des silicates alcalins, des sulfures alcalins, des cyanures alcalins et/ou des hydroxydes de tétraalkylammonium avec utilisation de rapports $OH^{\ominus}/NCO$ compris entre 0,3 : 1 et 2 : 1,

b) une quantité d'eau suffisante pour obtenir au moins une mole d'eau par mole de groupe NCO et, éventuellement, des solvants,

c) éventuellement en présence de composés à faible poids moléculaire présentant au moins un groupe hydroxyle et/ou amino et/ou d'autres groupes à hydrogène actifs, leur masse moléculaire étant comprise entre 18 et 399,

en maintenant dans le mélange réactionnel une température inférieure à 100 °C, en un mélange réactionnel présentant des groupes carbamate à liaisons aromatiques, des groupes uréthane, des groupements polyester et, éventuellement, d'autres groupes provenant de la chimie des isocyanates et

II. en ce que, pour produire la polyamine aromatique au départ du mélange réactionnel contenant des groupes carbamate, celui-ci

d) est traité par un donneur de protons provenant du groupe des acides insolubles fixés sur un squelette polymère ou des acides minéraux ou organiques, liquides ou solubles dans l'eau, afin de neutraliser la base et que la polyamine est éventuellement séparée et/ou

e) est traité thermiquement à des températures jusqu'à 200 °C, tandis que la polyamine est éventuellement séparée et/ou

f) est traité avec 10 à 1 000 parties d'un solvant pour 100 parties de mélange réactionnel, éventuellement avec traitement thermique, tandis que la polyamine est éventuellement séparée.

2. Procédé selon la revendication 1, caractérisé en ce que l'on utilise comme composés NCO des pré-produit(s) d'addition NCO de polyisocyanates aromatiques présentant de 2 à 8 groupes NCO aromatiques à des polyesters à poids moléculaire élevé, présentant de 2 à 8 groupes hydroxyle et provenant des acides polycarboxyliques et des polyols ayant une masse moléculaire comprise entre 500 et 5 000, éventuellement en combinaison avec jusqu'à 50 % en poids de composés polyhydroxylés à poids moléculaire élevé, présentant de 2 à 8 groupes hydroxyle et provenant de la série des polyéthers, des polyacétals, des polythioéthers, des polysiloxanes ou des polybutadiènes ayant une masse moléculaire comprise entre 500 et 5 000 et/ou éventuellement, des agents d'allongement de chaîne à 2 à 4 fonctions et dont la masse moléculaire est comprise entre 18 et 399,

le rapport d'équivalence des groupes portant des atomes d'hydrogène actif aux groupes NCO étant compris entre 1,5 et 2,8

et la teneur en NCO des composés NCO étant comprise entre 1,7 et 7,2 % en poids, ces produits étant

soumis à hydrolyse basique et une température inférieure à 40 °C étant maintenue pendant l'hydrolyse.

3. Procédé selon la revendication 1 et 2, caractérisé en ce que l'on utilise comme composés NCO des pré-produits d'addition NCO présentant de 2 à 3 groupes NCO aromatiques d'hydroxypolyesters avec 2 à 3 groupes hydroxyle et une masse moléculaire comprise entre 1 000 et 4 000 et des diisocyanates aromatiques éventuellement en présence d'autres composés polyhydroxylés à poids moléculaire élevé et/ou d'agents d'allongement de chaîne à 2 à 4 fonctions, avec des groupes à hydrogène actif, ayant une teneur en NCO de 1,7 à 7,2 % en poids, ces produits étant soumis à hydrolyse basique.

4. Procédé selon les revendications 1 à 3, caractérisé en ce qu'on utilise comme bases des hydroxydes alcalins, des hydroxydes alcalinoterreux et/ou des hydroxydes de tétraalkylammonium en quantité de 0,6 : 1 à 1,8 : 1 équivalent de base par groupe, éventuellement en présence de solvants et/ou d'eau en excès et/ou de composés à faible poids moléculaire, avec des groupes à hydrogène actif.

5. Procédé selon les revendications 1 à 4, caractérisé en ce que l'on transforme le composé NCO avec les bases, l'eau et, éventuellement les solvants, en présence de composés à faible poids moléculaire présentant des groupes à hydrogène actif et dont la masse moléculaire est comprise entre 62 et 250, avec des groupes à 2 à 4 hydrogène actifs provenant de la série des groupes hydroxyle et/ou amine, en mélange réactionnel contenant des groupes carbamate.

6. Procédé selon les revendications 1 à 6, caractérisé en ce que le mélange réactionnel contenant des composés présentant des groupes carbamate est traité avec ≥ un équivalent d'un donneur de protons rapporté à la quantité de base à l'étape I, et que ce donneur de protons est choisi dans le groupe des acides minéraux, des acides organiques et des acides fixés sur un squelette polymère insoluble, et que l'acide en excès est, éventuellement, neutralisé à nouveau.

7. Procédé selon les revendications 1 à 5, caractérisé en ce que le mélange réactionnel contenant des composés présentant des groupes carbamate est traité pour décomposer le carbamate à des températures de 60 à 100 °C, éventuellement en présence de solvants et en faisant le vide.

8. Procédé selon les revendications 1 à 6, caractérisé en ce que le mélange réactionnel contenant des composés présentant des groupes carbamate est extrait avec un solvant organique non miscible avec l'eau.

9. L'utilisation du composé présentant des groupes amino aromatiques primaires, des groupes uréthane, des groupements polyesters et, éventuellement, d'autres groupements provenant de la chimie des isocyanates est obtenu suivant le procédé 1-8, comme composant de réaction pour la production de matières plastiques cellulaires à base de polyuréthane et de mousse de polyuréthane.